# EUROPEAN PATENT APPLICATION

(11) **EP 4 697 850 A1**
(43) Date of publication of application: **18.02.2026**
(21) Application number: 23947129.5
(22) Date of filing: 02.08.2023
(51) Int. Cl.: H04W 76/15

(54) **WIRELESS COMMUNICATION METHOD, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN); ZHANG, Jun, Dongguan, Guangdong 523860 (CN)
(74) Representative: Taor, Simon Edward William
(86) International application number: PCT/CN2023/110853
(87) International publication number: WO 2025/025181

(57) **Abstract**

Provided in the embodiments of the present application are a wireless communication method, and a device and a storage medium. The method comprises: a non-access-point multi-link device receiving or sending a first frame, wherein the first frame is used for the non-access-point multi-link device to switch between a first access point multi-link device and a second access point multi-link device, the first access point multi-link device and the second access point multi-link device belonging to the same third access point multi-link device or different third access point multi-link devices, and the third access point multi-link device being a logical access point multi-link device.

## Description

### TECHNICAL FIELD

Embodiments of the present application relate to the technical field of mobile communication, in particular to a wireless communication method and device, and a storage medium.

### BACKGROUND

The wireless local area network (WLAN) industry is one of the fastest growing industries in the entire data communication field at present. The WLAN solution, as a supplement and extension to traditional wired local area networks, has gained popularity among home network users, small and medium-sized office users, enterprise users and telecom operators because of its advantages of flexibility, mobility, scalability and low investment cost, and has been rapidly applied.

In multi-link operation, multiple links may be established between an Access Point multi-link device (AP MLD) and a non-AP MLD over multiple different frequency bands/channels. As a station (STA) moves, there will be a Basic Service Set (BSS) transition, that is, the STA may disconnect from the currently-connected access point (AP) and establish connection with another AP. How to reduce the length of time when connectivity is lost between the STA and the Distribution System (DS) or between the non-AP MLD and the DS during the BSS transition is an urgent technical problem to be addressed.

### SUMMARY

Embodiments of the present disclosure provide a wireless communication method and device, and a storage medium.

A wireless communication method according to an embodiment of the present disclosure includes the following operation.

A non-AP MLD receives or transmits a first frame. The first frame is used for the non-AP MLD to transition between a first AP MLD and a second AP MLD, the first AP MLD and the second AP MLD are affiliated with the same third AP MLD or different third AP MLDs, and the third AP MLD is a logical AP MLD.

A wireless communication method according to an embodiment of the present disclosure includes the following operation.

An AP MLD transmits or receives a first frame. The first frame is used for a non-AP MLD to transition between a first AP MLD and a second AP MLD, the first AP MLD and the second AP MLD are affiliated with the same third AP MLD or different third AP MLDs, the third AP MLD is a logical AP MLD, and the AP MLD is the first AP MLD or the second AP MLD.

A non-AP MLD according to an embodiment of the present disclosure includes a first communication unit.

The first communication unit is configured to receive or transmit a first frame. The first frame is used for the non-AP MLD to transition between a first AP MLD and a second AP MLD, the first AP MLD and the second AP MLD are affiliated with the same third AP MLD or different third AP MLDs, and the third AP MLD is a logical AP MLD.

An AP MLD according to an embodiment of the present disclosure includes a second communication unit.

The second communication unit is configured to transmit or receive a first frame. The first frame is used for a non-AP MLD to transition between a first AP MLD and a second AP MLD, the first AP MLD and the second AP MLD are affiliated with the same third AP MLD or different third AP MLDs, the third AP MLD is a logical AP MLD, and the AP MLD is the first AP MLD or the second AP MLD.

A non-AP MLD according to an embodiment of the present disclosure includes a processor and a memory. The memory is configured to store a computer program, and the processor is configured to invoke and execute the computer program stored in the memory to cause the non-AP MLD to perform the wireless communication described above.

An AP MLD according to an embodiment of the present disclosure includes a processor and a memory. The memory is configured to store a computer program, and the processor is configured to invoke and execute the computer program stored in the memory to cause the non-AP MLD to perform the wireless communication described above.

A chip according to an embodiment of the present disclosure is used to implement the wireless communication method described above.

Specifically, the chip includes a processor configured to invoke and execute a computer program from a memory, to enable a device installed with the chip to perform the wireless communication method described above.

A computer-readable storage medium according to an embodiment of the present disclosure is configured to store a computer program. Execution of the computer program causes a computer to perform the wireless communication method described above.

A computer program product according to an embodiment of the present disclosure includes computer program instructions, and execution of the computer program instructions causes a computer to perform the wireless communication method described above.

A computer program according to an embodiment of the present disclosure causes a computer to perform the wireless communication method described above when the computer program is run on the computer.

According to the above technical solutions, the non-AP MLD transitions between the first AP MLD and the second AP MLD affiliated with the same logical AP MLD or different third AP MLDs, such that transition or switching of the communication between the first AP MLD and the non-AP MLD and the communication between the second AP MLD and the non-AP MLD is controlled under the architecture where the third AP MLD is provided above the first AP MLD and the second AP MLD, thereby enabling the non-AP MLD oriented towards data continuity to transition or switch between the first AP MLD and the second non-AP MLD.

### BRIEF DESCRIPTION OF THE DRAWINGS

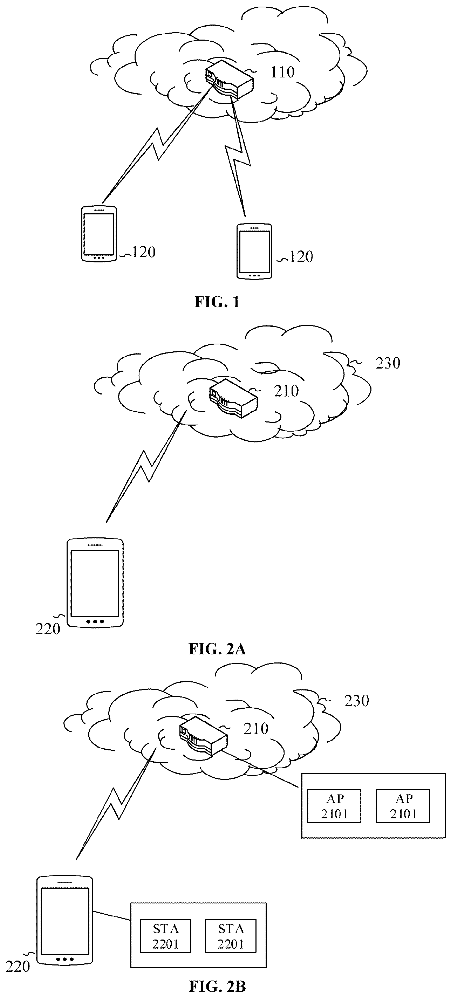

The drawings described herein are adopted to provide a further understanding to the present disclosure and form a part of the present disclosure. Schematic embodiments of the present disclosure and descriptions thereof are adopted to explain the present disclosure and not intended to form improper limits to the present disclosure. In the drawings: **[0022]** FIG. 1 is an optional schematic diagram of an application scenario to which an embodiment of the present disclosure is applied.
FIG. 2A is an optional schematic diagram of an application scenario to which an embodiment of the present disclosure is applied.
FIG. 2B is an optional schematic diagram of an application scenario to which an embodiment of the present disclosure is applied.
FIG. 3 is an optional schematic diagram of an application scenario to which an embodiment of the present disclosure is applied.
FIG. 4 is an optional schematic diagram of an application scenario of a logical AP MLD according to an embodiment of the present disclosure.
FIG. 5 is an optional flowchart of a wireless communication method according to an embodiment of the present disclosure.
FIG. 6 is an optional flowchart of a wireless communication method according to an embodiment of the present disclosure.
FIG. 7 is an optional schematic diagram of a third AP MLD according to an embodiment of the present disclosure.
FIG. 8 is a schematic diagram of an application scenario in which a non-AP MLD transitions between different affiliated AP MLDs of a third AP MLD according to an embodiment of the present disclosure.
FIG. 9 is an optional schematic diagram of a mobility domain (MD) AP MLD higher layer architecture according to an embodiment of the present disclosure.
FIG. 10 is an optional flowchart of a resource request procedure according to an embodiment of the present disclosure.
FIG. 11 is an optional frame structure diagram of a block acknowledgement (ack) agreement context element according to an embodiment of the present disclosure.
FIG. 12 is an optional frame structure diagram of a block ack agreement context parameters control field according to an embodiment of the present disclosure.
FIG. 13 is an optional frame structure diagram of a block ack agreement context parameter set subfield according to an embodiment of the present disclosure.
FIG. 14 is an optional frame structure diagram of a block ack parameter set subfield according to an embodiment of the present disclosure.
FIG. 15 is an optional frame structure diagram of a block ack agreement context parameter set subfield for an originator according to an embodiment of the present disclosure.
FIG. 16 is an optional frame structure diagram of a block ack agreement context parameter set subfield for a recipient according to an embodiment of the present disclosure.
FIG. 17 is an optional frame structure diagram of a security association (SA) context element according to an embodiment of the present disclosure.
FIG. 18 is an optional frame structure diagram of an SA context parameters control field according to an embodiment of the present disclosure.
FIG. 19 is an optional frame structure diagram of an SA context parameters set list field according to an embodiment of the present disclosure.
FIG. 20 is an optional frame structure diagram of an SA context parameter set subfield of a receiver according to an embodiment of the present disclosure.
FIG. 21 is an optional frame structure diagram of an SA context parameter set subfield of a transmitter according to an embodiment of the present disclosure.
FIG. 22 is an optional frame structure diagram of a transition capability and policy field according to an embodiment of the present disclosure.
FIG. 23 is an optional frame structure diagram of a mobility domain element (MDE) according to an embodiment of the present disclosure.
FIG. 24 is an optional schematic diagram of an MD AP MLD higher layer architecture according to an embodiment of the present disclosure.
FIG. 25 is an optional flowchart of a wireless communication method according to an embodiment of the present disclosure.
FIG. 26 is an optional schematic structural diagram of a non-AP MLD according to an embodiment of the present disclosure.
FIG. 27 is an optional schematic structural diagram of an AP MLD according to an embodiment of the present disclosure.
FIG. 28 is a schematic structural diagram of a communication device according to an embodiment of the present disclosure.
FIG. 29 is a schematic structural diagram of a chip according to an embodiment of the present disclosure.
FIG. 30 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

The technical solution of the embodiments of the present disclosure may be applied to various communication systems, such as Wireless Local Area Networks (WLAN), Wireless Fidelity (WiFi), other communication systems, and the like. The frequency bands that the WLAN can support may include, but are not limited to, low frequency bands (2.4 GHz, 5 GHz, 6 GHz), high frequency bands (45 GHz, 60 GHz).

FIG. 1 is an example of a communication system architecture to which an embodiment of the present disclosure is applied.

As illustrated in FIG. 1, the communication system 100 may include an AP 110, and a Station (STA) 120 accessing the network through the AP 110. In some scenarios, the AP 110 may be referred to as an AP STA, i.e., the AP 110 is also a STA in a sense. In some scenarios, the STA 120 is referred to as a non-AP STA. In some scenarios, the STAs 120 may include an AP STA and a non-AP STA. The communication in the communication system 100 may include communication between the AP 110 and the STA 120, or communication between the STAs 120, or communication between the STA 120 and a peer STA. The peer STA may refer to a peer device communicating with the STA 120, for example, the peer STA may be an AP or a non-AP STA.

The AP 110 can be used as a bridge connecting a wired network and a wireless network, and its main function is to connect various wireless network clients together, and then connect the wireless network to the Ethernet. The AP 110 may be a terminal device (such as a mobile phone) with a WiFi chip or a network device (such as a router).

It should be noted that the role of the STA 120 in the communication system is not absolute, that is, the role of the STA 120 in the communication system can be switched between the AP and the STA. For example, in some scenarios, when the mobile phone is connected to the router, the mobile phone is an STA, and when the mobile phone acts as a hotspot for other mobile phones, the mobile phone acts as an AP.

In some embodiments, the AP 110 and the STA 120 may be devices applied in the Internet of Vehicles, internet of things (IoT) nodes, sensors or the like in the IoT, smart cameras, smart remote controllers, smart water meters or the like in smart homes, and sensors or the like in smart cities.

In some embodiments, the AP 110 may be a device that supports the 802.11be standard. The AP may be a device supporting various current and future 802.11 family WLAN standards such as 802.11ax, 802.11ac, 802.11n, 802.11g, 802.11b, and 802.11a. In some embodiments, the STA 120 may support the 802.11be standard. The STA may also support various current and future 802.11 family WLAN standards such as 802.11ax, 802.11ac, 802.11n, 802.11g, 802.11b, and 802.11a.

In some embodiments, the AP 110 and/or the STA 120 may be deployed on land, including indoor or outdoor, handheld, wearable, or vehicle-mounted; may also be deployed in the water (such as in ships, etc.); and may also be deployed in the air (such as in aircraft, balloons, or satellites, etc.).

In some embodiments, the STA 120 may be a Mobile Phone, a Pad, a computer with a wireless transceiver function, a Virtual Reality (VR) device, an Augmented Reality (AR) device, a wireless device in industrial control, a set-top box, a wireless device in self-driving, an in-vehicle communication device, a wireless device in remote medical, a wireless device in smart grid, a wireless device in transportation safety, a wireless device in smart city or smart home, an in-vehicle communication device, a wireless communication chip/an application specific integrated circuit (ASIC)/a System on Chip (SoC), or the like that supports the WLAN/WiFi technology.

Exemplarily, the STA 120 may also be a wearable device. The wearable device may also be called a wearable smart device, which is a general name of wearable devices applying wearable technology to intelligently design daily wear and develop wearable devices, such as glasses, a glove, a watch, clothing and a shoe, etc. The wearable device is a portable device that is directly worn on the body or integrated into the user's clothes or accessories. The wearable device is not only a hardware device, but also realizes powerful functions through software support, data interaction and cloud interaction. The generalized wearable smart device has full functions, large size, complete or partial functions that may be implemented without relying on smart phones, such as a smart watch or smart glasses, etc. The generalized wearable smart device may only focus on certain application functions, and needs to be used together with other devices such as a smart phone, for example, various smart bracelets and smart jewelry for sign monitoring.

It should be understood that FIG. 1 is merely an example of the present disclosure and should not be construed as a limitation of the present disclosure. For example, FIG. 1 illustrates only one AP and two STAs by way of example, and in some embodiments, the communication system 100 may include a plurality of APs and other numbers of STAs, which are not limited in the embodiments of the present disclosure.

FIG. 2A is a schematic diagram of an application scenario according to an embodiment of the present disclosure.

As illustrated in FIG. 2A, the communication system 200 may include AP MLDs 210 and 220. The AP MLD 210 is an electronic device capable of forming a wireless local area network 230 based on a transmitted signal, such as a router, a mobile phone having a hotspot function, and the non-AP MLD 220 is an electronic device connected to the wireless local area network 230 formed by the AP MLD 210, such as a mobile phone, a smart washing machine, an air conditioner, an electronic lock, and the like. The non-AP MLD 220 communicates with the AP MLD 210 through the wireless local area network 230. The AP MLD 210 may be a soft AP MLD, a Mobile AP MLD, or the like.

As illustrated in FIG. 2B, in the communication system of FIG. 2A, the AP MLD 210 is affiliated with at least two APs 2101, and the non-AP MLD 220 is affiliated with at least two stations (STAs) 2201, in which the APs are connected to the respective different STAs in the non-AP MLD 220 by different links. An AP affiliated with AP MLD may also be referred to as an affiliated AP of the AP MLD, and a STA affiliated with non-AP MLD may also be referred to as an affiliated non-AP STA of the non-AP MLD or an affiliated STA of the non-AP MLD.

In embodiments of the present disclosure, the AP MLD 210 and the non-AP MLD 220 may be terminal devices. The terminal devices may refer to an access terminal, a User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in the 5th generation (5G) network, or a terminal device in a future evolved Public Land Mobile Network (PLMN), or the like.

The communication system 200 illustrated in FIG. 2A may further include a network device, and the network device may be an access network device that communicates with the terminal device. The access network device may provide communication coverage for a particular geographic area and may communicate with terminal devices located within the coverage area.

FIG. 2A illustrates an AP MLD, a non-AP MLD, and optionally, the communication system 200 may include a plurality of non-AP MLDs connected to the wireless local area network 230, which is not limited in the embodiments of the present disclosure.

It should be noted that FIG. 1, FIG. 2A and FIG. 2B only illustrate systems applicable to the present disclosure by way of examples, and of course, the methods in the embodiments of the present disclosure can also be applied to other systems. Further, the terms "system" and "network" in the present disclosure are often used interchangeably herein. The term "and/or" herein is only an association relationship describing associated objects and represents three relationships. For example, A and/or B may represent the following three cases: independent existence of A, existence of both A and B, and independent existence of B. In addition, the character "/" in the present disclosure generally represents that previous and next associated objects form an "or" relationship. It is to be understood that the term "indication" mentioned in the embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B. It should be understood that the term "correspondence" in the embodiments of the present disclosure may indicate that there is a direct correspondence or indirect correspondence between two elements, or may indicate that there is an association relationship between the two elements, or may indicate a relationship between indicating and being indicated, or between configuring and being configured, etc. It should also be understood that in the embodiments of the present disclosure, "predefined" or "predefined rule" may be implemented by pre-storing the corresponding codes, tables, or other manners for indicating relevant information in the device (including, for example, the terminal device and the network device), and the specific implementations thereof are not limited in the present disclosure. For example, "predefined" may refer to those defined in a protocol. It should also be understood that in the embodiments of the present disclosure, the "protocol" may refer to a standard protocol in the field of communication, which may include, for example, an IEEE 802.11 protocol, an LTE protocol, an NR protocol, and related protocols applied in the future communication system, which is not limited in the present disclosure

In order to facilitate understanding of the technical solutions of the embodiments of the present disclosure, related techniques of the embodiments of the present disclosure will be described below. The related technologies as alternative solutions can be arbitrarily combined with the technical solutions of the embodiments of the present disclosure, and shall fall within the scope of protection of the embodiments of the present disclosure.

Without special indication, a STA refers to a non-AP device without an affiliated STA.

In the related art, a multi-link operation (MLO) and an AP MLD and a non-AP MLD having the MLO capability are defined, and multiple links are established between the AP MLD and the non-AP MLD on multiple different frequency bands/channels.

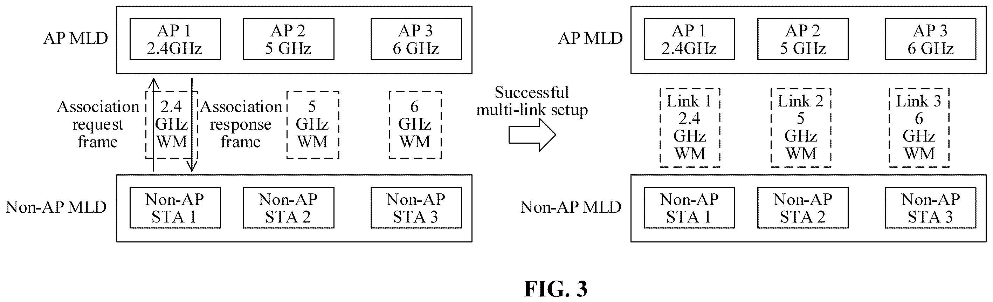

As illustrated in FIG. 3, the non-AP MLD and the AP MLD successfully establish a plurality of links by the following procedure. Non-AP STA1 in the non-AP MLD sends an association request frame to AP 1 in the AP MLD, and the AP 1 in the AP MLD sends an association response frame to the Non-AP STA1 in the non-AP MLD. The links established between the AP MLD and the non-AP MLD include link 1 on 2.4 GHz Wireless Medium (WM), link 2 on 5 GHz WM, and link 3 on 6 GHz WM, and these three links can operate simultaneously. AP 1 operating on link 1 (2.4 GHz), AP 2 operating on link 2 (5 GHz), and AP 3 operating on link 3 (6 GHz) are respectively referred to as affiliated APs of the AP MLD. Similarly, non-AP STA 1 operating on link 1 (2.4 GHz), non-AP STA 2 operating on link 2 (5 GHz) and non-AP STA 2 operating on link 3 (6 GHz) are respectively referred to as affiliated non-AP STAs of the non-AP MLD.

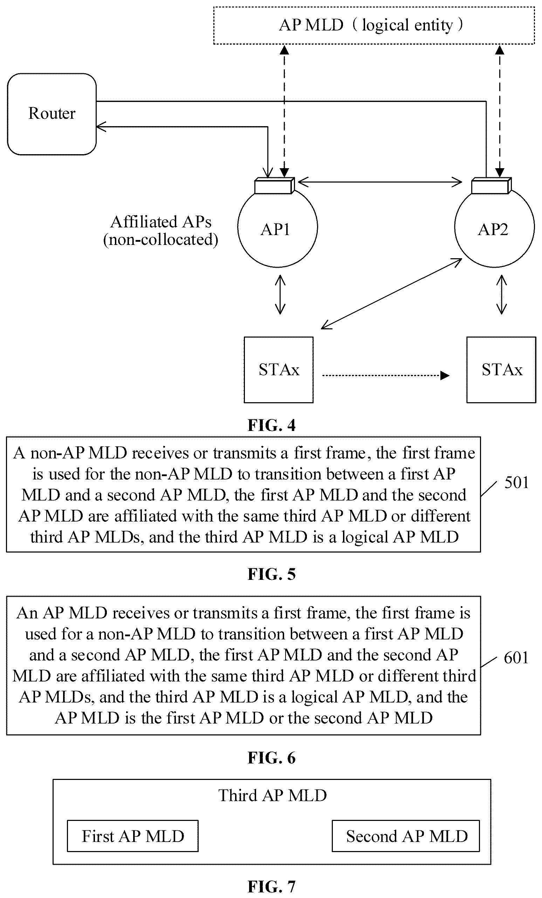

In the related art, as illustrated in FIG. 4, a plurality of non-collocated APs are regarded as one AP MLD, and the AP MLD is a logical entity. When a STA is connected to the AP MLD, the plurality of non-collocated APs can be regarded as different affiliated APs of the AP MLD, so that the AP MLD uses different affiliated APs to provide services to the STA using different links by using a multi-link operation architecture, thereby better realizing seamless roaming of the STA. As illustrated in FIG. 4, the STA x is connected to AP 1 and AP 2 by multi-link, respectively, and when the STA x moves, the link connection to AP 1 is disconnected but the link connection to AP 2 is not affected, so the mobility support of the STA becomes better.

### Fast BSS transition (FT)

The FT seeks to reduce the length of time that connectivity is lost between a STA and the DS or between a non-AP MLD and the DS during a BSS transition. The FT protocol is part of the reassociation service and only apply to a STA or a non-AP MLD transition to an AP or an AP MLD AP within the same mobility domain within the same Extended Service Set (ESS). The AP publishes the function and policy that support FT protocols and methods. The FT function is published in the beacon and probe response frame including a mobility domain element (MDE). The MDE is issued in the beacon and probe response frame to indicate a mobility domain identifier (MDID), FT capability, and FT policy.

The FT protocol requires information to be exchanged during the initial association (or a later reassociation) between a STA (called a fast BSS transition originator (FTO)) and an AP (called a fast BSS transition responder (FTR)) or between a non-AP MLD (referred to as FTO) and an AP MLD (referred to as FTR). The initial exchange is referred to as an FT initial mobility domain association. Subsequent reassociation to FTRs within the same mobility domain may use the FT protocol.

Two FT protocols are defined:
- FT protocol. This protocol is executed when an FTO makes a transition to a target FTR, and does not require a resource request prior to its transition.

FT resource request protocol. This protocol is executed when an FTO requires a resource request prior to its transition.

For an FTO to move to a target FTR utilizing the FT protocols, the message exchanges are performed using one of two methods:

Over-the-Air. The FTO communicates directly with the target FTR using IEEE 802.11 authentication with the FT authentication algorithm.

Based on DS (Over-the-DS). The FTO communicates with the target FTR via the current FTR. Communication between the FTO and the target FTR is carried in FT Action frames between the FTO and the current FTR. Communication between the current FTR and the target FTR is via an encapsulation method described in "Remote Request/Response Frame Definition". The current AP converts between the two encapsulations.

Although the current FT can reduce the length of time during which connectivity is lost between the STA and the DS or between the Non-AP MLD and the DS during the BSS transition, data continuity between the STA and the DS or between the Non-AP MLD and the DS cannot be maintained because the STA (or Non-AP MLD) needs to reassociate and re-establish the data transmission and reception agreement and context when transitioning to the target AP (or target AP MLD).

Although the logical AP MLD can theoretically support multiple APs at different locations affiliated with one logical AP MLD to use different links to provide services to the same non-AP MLD to achieve seamless roaming of the non-AP MLD. However, when a plurality of APs at different positions affiliated with one logical AP MLD perform data communication with the same non-AP MLD through different links, since the affiliated APs of the logical AP MLD are at different positions, the synchronization and transmission and reception acknowledgement between APs based on the data communication status of the non-AP MLD requires high communication quality of the backhaul link between APs, and thus it is difficult to realize the synchronization and transmission and reception acknowledgement between these APs based on the data communication status of the non-AP MLD.

In order to facilitate understanding of the technical solutions of the embodiments of the present disclosure, the technical solutions of the present disclosure will be described in detail below with reference to specific examples. The above related technologies as alternative solutions can be arbitrarily combined with the technical solutions of the embodiments of the present disclosure, and all of them fall within the scope of protection of the embodiments of the present disclosure. Embodiments of the present disclosure include at least part of the following.

The wireless communication method provided by the embodiments of the present disclosure is applied to a non-AP MLD. As illustrated in FIG. 5, the method includes the operation in S501.

In S501, a non-AP MLD receives or transmits a first frame. The first frame is used for the non-AP MLD to transition between a first AP MLD and a second AP MLD, the first AP MLD and the second AP MLD are affiliated with the same third AP MLD or different third AP MLDs, and the third AP MLD is a logical AP MLD.

The wireless communication method provided by the embodiments of the present disclosure is applied to an AP MLD. As illustrated in FIG. 6, the method includes the operation in S601

In S601, an AP MLD transmits or receives a first frame. The first frame is used for a non-AP MLD to transition between a first AP MLD and a second AP MLD, the first AP MLD and the second AP MLD are affiliated with the same third AP MLD or different third AP MLDs, and the third AP MLD is a logical AP MLD\, and the AP MLD is the first AP MLD or the second AP MLD.

The wireless communication methods illustrated in FIG. 5 or FIG. 6 will be described below.

The first AP MLD and the second AP MLD are two AP MLDs that are not co-collocated.

The non-AP MLD transitions between a first AP MLD and a second AP MLD, which comprising one of the following.

Transition scenario 1: When the Non-AP MLD is associated with a third AP MLD, and the first AP MLD and the second AP MLD are both affiliated with the same third AP MLD, the non-AP MLD performs affiliated AP MLD of the third AP MLD-level associated transition (or handover/switching) between the first AP MLD and the second AP MLD.

Transition scenario 2: When the Non-AP MLD is only associated with the first AP MLD or the second AP MLD, the first AP MLD and the second AP MLD are not affiliated with the same logical AP MLD, the non-AP MLD performs an associated transition (or handover) between the first AP MLD and the second AP MLD.

The transition in the embodiments of the present disclosure may also alternatively be described as handover/switching.

For the transition scenario 1, the affiliated AP MLD of the third AP MLD-level associated transition (or handover) indicates that prior to the transition, the non-AP MLD is associated with the third AP MLD and the non-AP MLD establishes multiple links with one AP MLD affiliated to the third AP MLD (i.e. all or part of the links established between the non-AP MLD and the third AP MLD belong to the links between the non-AP MLD and one affiliated AP MLD of the third AP MLD), and after the transition, the non-AP MLD is still associated with the third AP MLD and the non-AP MLD establishes multiple links with another AP MLD affiliated with the third AP MLD (i.e. all or part of the links established between the non-AP MLD and the third AP MLD belong to the links between the non-AP MLD and another affiliated AP MLD of the third AP MLD).

As illustrated in FIG. 7, the first AP MLD and the second AP MLD are affiliated AP MLDs of the same third AP MLD or AP MLDs affiliated with the same third AP MLD. The affiliated AP MLDs of the third AP MLD may or may not include other AP MLDs in addition to the first AP MLD and the second AP MLD.

In the embodiments of the present disclosure, the third AP MLD herein is a logical entity composed of multiple AP MLDs including the first AP MLD and the second AP MLD. It can be understood that the multiple AP MLDs forming the third AP MLD belong to the same mobility domain, and the third AP MLD may be an AP MLD corresponding to the mobility domain, and may be defined as a mobility domain multi-link device (MD AP MLD).

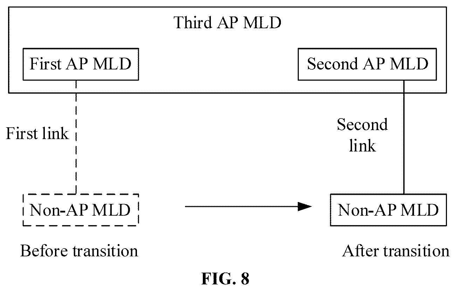

It is to be understood that the first AP MLD is an AP MLD prior to transition, and the second AP MLD is an AP MLD after the transition. As illustrated in FIG. 8, prior to transition, the non-AP MLD is associated with the first AP MLD affiliated with the third AP MLD, and the link with the third AP MLD includes a first link with the first AP MLD, and after the transition, the non-AP MLD is associated with the second AP MLD affiliated with the third AP MLD, and the link with the third AP MLD includes a second link with the second AP MLD. Accordingly, when the non-AP MLD is associated with the first AP MLD affiliated with the third AP MLD, as the non-AP MLD moves, the non-AP MLD associates or reassociates with the second AP MLD affiliated with the third AP MLD, and continues to transmit data, which is transmitted through the first link between the non-AP MLD and the first AP MLD, through the second link between the non-AP MLD and the second AP MLD, thereby maintaining session continuity and data persistence during the procedure of the AP MLD associating with different affiliated AP MLDs of the third AP MLD due to roaming.

For the transition scenario 2, the non-AP MLD is associated with AP MLDs affiliated with different logical AP MLDs before and after transition or handover, thereby performing the associated transition or handover.

For a third AP MLD with which the first AP MLD is affiliated, the third AP MLD is affiliated with a plurality of AP MLDs including the first AP MLD.

For a third AP MLD with which the second AP MLD is affiliated, the third AP MLD is affiliated with a plurality of AP MLDs including the second AP MLD.

The frame in which the non-AP MLD communicates with the first AP MLD or the second AP MLD in the procedure of the non-AP MLD making a transition between the first AP MLD and the second AP MLD affiliated with the same third AP MLD or different third AP MLDs is referred to as the first frame.

The transition provided by the embodiments of the present disclosure may include fast BSS transition (FT), seamless BSS transition or seamless fast transition in BSS transition or BSS handover.

BSS transition or BSS handover refers to the process where a STA or non-AP MLD makes transition (or handover) from being associated with one BSS or the first AP MLD to being associated with another BSS or the second AP MLD (AP MLD) within the same ESS.

Fast BSS transition (FT) is a type of BSS transition and can minimize the loss time of data connection to the distribution system (DS).

Seamless BSS transition is a type of BSS transition and can maintain data connectivity with the DS.

Seamless fast BSS transition is a type of BSS transition and can maintain data connectivity with the DS and reduce the time of the BSS transition.

In the wireless communication method according to the embodiments of the present disclosure, the non-AP MLD transitions between a first AP MLD and a second AP MLD affiliated with the same logical AP MLD or different third AP MLDs, thereby performing switching or switching control on communication between the first AP MLD and the non-AP MLD and communication between the second AP MLD and the non-AP MLD in an architecture where the third AP MLD is provided over the first AP MLD and the second AP MLD, so that the non-AP MLD, which is oriented towards data continuity, transitions or switches between the first AP MLD and the second non-AP MLD.

Note that the method of FIG. 5 or FIG. 6 is a transition or handover of a non-AP MLD from a first AP MLD to a second AP MLD in a mobility domain AP MLD scenario(context), and the wireless communication method provided by the embodiments of the present disclosure is also applicable to a transition or handover of a non-MLD STA from a first AP to a second AP in a mobility domain AP MLD scenario.

In some embodiments, the first AP MLD is an AP MLD of which affiliated APs are co-located, and the second AP MLD is an AP MLD of which affiliated APs are co-located.

The non-AP MLD is associated with the third AP MLD (logical AP MLD), the first AP MLD is an AP MLD of which affiliated APs are co-located (referred to as a collocated AP MLD or co-located AP MLD), and the second AP MLD is an AP MLD of which affiliated APs are co-located. The first AP MLD and the second AP MLD are AP MLDs located at different locations.

In some embodiments, the third AP MLD is used for at least one of the following.

Function 1: Providing connection services between the non-AP MLD or an affiliated AP MLD and the DS.

Function 2: Maintaining data continuity of the non-AP MLD when performing transition between the first AP MLD and the second AP MLD during roaming.

Function 3: Authentication and/or association or reassociation of the non-AP MLD.

Function 4: Security association (SA) of the non-AP MLD.

Function 5: Distribution of all or part of security association information of the non-AP MLD.

Function 6: Synchronization of all or part of states and/or buffer information of the upper-upper Medium Access Control (upper-UMAC) of the affiliated AP MLDs.

Function 7: Managing distribution of authentication information for links of the non-AP MLD.

Function 8: Managing affiliated AP MLD-level association or reassociation between the non-AP MLD and the affiliated AP MLD.

Function 9: Selecting, for a target AP MLD among at least one affiliated AP MLD that establishes a multi-link with the non-AP MLD, a MAC corresponding to the target AP MLD for data transmission.

Function 10: Synchronization of first data between different affiliated AP MLDs, and the first data is used for maintaining data continuity of communication between the non-AP MLD and an affiliated AP MLD or DS;

Function 11: Exchange or indication of MLD-level information through a MAC sublayer of the affiliated AP MLD.

In the embodiments of the present disclosure, the affiliated AP MLD may be understood as an affiliated AP MLD of the third AP MLD.

For Function 1, the third AP MLD provides DS access function for its affiliated AP MLD and the non-AP MLD associated with the affiliated AP MLD, the affiliated AP MLD of the third AP MLD and the non-AP MLD associated with the affiliated AP MLD access the DS, so that the non-AP MLD can invoke one or more distribution system services (DSSs) directly or through the affiliated AP MLD.

For Function 2, the data continuity of the non-AP MLD when performing transition between the first AP MLD and the second AP MLD during roaming is maintained, so as to realize the seamless transition of the non-AP MLD between the first AP MLD and the second time.

For Function 3, the third AP MLD is used for authentication and/or association or reassociation of the non-AP MLD, which can be understood that when the non-AP MLD is associated or reassociated with the third AP MLD, the non-AP MLD is associated or reassociated with an AP MLD affiliated with the third AP MLD.

When the non-AP MLD is associated with an affiliated AP MLD of the third AP MLD, the non-AP MLD is associated with the third AP MLD. In the embodiments of the present disclosure, if the non-AP MLD is associated with the affiliated AP MLD of the third AP MLD, there is an association between the non-AP MLD and the affiliated AP MLD of the third AP MLD, and in such case, there is also an association between the non-AP MLD and the third AP MLD, so that the non-AP MLD can invoke the DSS.

The third AP MLD can authenticate a non-AP MLD associated with an affiliated AP MLD of the third AP MLD.

The types of security associations in Function 4 may include at least one of Pairwise Master Key Security Association (PMKSA), or Pairwise Transient Key Security Association (PTKSA).

For Function 5, the third AP MLD is used for distributing security association information of the non-AP MLD.

A security association may be established between the non-AP MLD and an affiliated AP MLD of the third AP MLD, and the third AP MLD distributes all or part of the security association information.

The security association information includes information used when data transmission is performed on the established security association.

For Function 6, the affiliated AP MLD of the third AP MLD may include an upper MAC and a lower MAC, an upper-upper MAC (upper-UMAC) of the affiliated AP MLD of the third AP MLD, that is, a common MAC sublayer, synchronizes all or part of the status and/or buffer information of the upper layer MAC of the affiliated AP MLD.

In some embodiments, the manner of synchronization includes at least one of replication or migration.

For Function 7, the authentication information of the link includes at least one of the following: Group Temporal Key (GTK), Integrity GTK (IGTK), Beacon IGTK (BIGTK).

The affiliated AP MLD-level association or reassociation in Function 8 indicates that the non-AP MLD performs multi-link establishment or multi-link re-establishment with an affiliated AP MLD of the third AP MLD, that is, the non-AP MLD is associated or reassociated with the third AP MLD and at least one of the links established (or re-established) between the non-AP MLD and the third AP MLD belongs to the link between the non-AP MLD and the affiliated AP MLD of the third AP MLD.

In some embodiments, when the non-AP MLD is associated or reassociated with an affiliated AP MLD of the third AP MLD, the non-AP MLD can be associated with the affiliated AP MLD of the third AP MLD when the association request frame transmitted by the non-AP MLD carries indication information indicating the third AP MLD.

It to be understood that when the non-AP MLD is associated with one affiliated AP MLD of the third AP MLD, the non-AP MLD can also be associated or reassociated with other affiliated AP MLDs of the third AP MLD.

For Function 9, the third AP MLD is used to select, for a target AP MLD among at least one affiliated AP MLD with which the non-AP MLD is associated or establishes a multi-link, the MAC corresponding to the target AP MLD for data transmission. It to be understood that MAC of all affiliated AP MLDs of the third AP MLD accesses to the third AP MLD. An AP MLD associated with the non-AP MLD among the affiliated AP MLDs of the third AP MLD is the target AP MLD. When the non-AP MLD performs data communication with the target AP MLD, the third AP MLD selects the MAC of the target AP MLD from the MAC of all the affiliated AP MLDs for data communication.

For Function 10, the third AP MLD is used for synchronization of first data among different affiliated AP MLDs of the third AP MLD, such that the first data for data communication with the same non-AP MLD can be synchronized among different affiliated AP MLDs of the third AP MLD. It is to be understood that when a non-AP MLD performs data communication with an affiliated AP MLD of the third AP MLD using the first data, the third AP MLD may synchronize the first data to another affiliated AP MLD of the third AP MLD, so that the affiliated AP MLD continues data communication with the non-AP MLD based on the first data, thereby maintaining continuity of data communication.

The third AP MLD is also used for synchronization of the first data to the DS. Synchronization of the first data to the DS may be understood as synchronization of the first data between different AP MLDs.

For Function 7, the third AP MLD is configured to exchange MLD-level information between different affiliated AP MLDs through the MAC sublayers of the different affiliated AP MLDs, or the third AP MLD indicates information to the MAC sublayer of the affiliated AP MLD, thereby performing MLD-level information indication to the affiliated AP MLD. It is understood that the MLD-level information is information of an AP MLD affiliated with the third AP MLD or a Non-AP MLD associated with the affiliated AP MLD.

In some embodiments, when the first AP MLD or the second AP MLD is an AP MLD that includes an Upper MAC sublayer and a Lower MAC sublayer, the third AP MLD is a Common MAC sublayer, the Upper MAC sublayer provides a MAC Service Access Point (SAP) to communicate with the common MAC sublayer, the common MAC sublayer provides a MAC SAP to communicate with the Upper MAC sublayer of an affiliated AP MLD, and the Lower MAC sublayer of the affiliated AP MLD may include at least one affiliated AP included in the affiliated AP MLD.

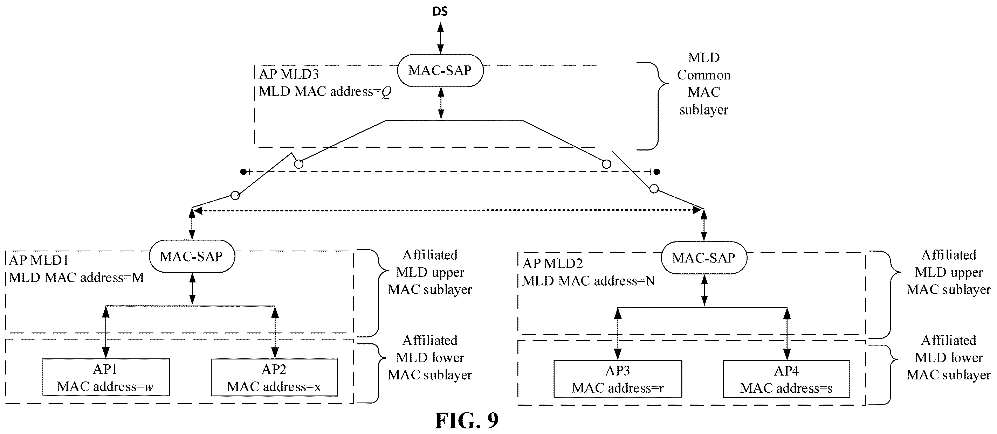

Assuming that the first AP MLD is AP MLD1, the second AP MLD is AP MLD2, and the third AP MLD is AP MLD3, the high-layer architecture of the third AP MLD and the affiliated first AP MLD and the affiliated second AP MLD is illustrated in FIG. 9. The MLD MAC address of the AP MLD1 is M, and affiliated APs includes: AP1 with a MAC address of w and AP2 with a MAC address of x. The MLD MAC address of AP MLD2 is N, and affiliated APs include: AP3 with a MAC address of r and AP4 with a MAC address of s. The MLD MAC address of AP MLD3 is Q. The AP MLD3 serves as the MLD common MAC sublayer, the AP MLD1 includes an affiliated MLD upper MAC sublayer, an lower MAC sublayer and an affiliated MLD lower MAC sublayer, the AP MLD2 includes an affiliated MLD upper MAC sublayer, an lower MAC sublayer and an affiliated MLD lower MAC sublayer, the affiliated MLD upper MAC sublayer is provided with a MAC SAP for communicating with the MAC SAP of the MLD common MAC sublayer, and the affiliated MLD lower MAC sublayer provides affiliated APs of the affiliated AP MLD. The affiliated MLD upper MAC sublayer connected with the MLD common MAC sublayer can be switched between the affiliated MLD upper MAC sublayer of the AP MLD1 and the affiliated MLD upper MAC sublayer of the AP MLD2, and by the switching, synchronization of the first data can be performed between the affiliated MLD upper MAC sublayer of the AP MLD1 and the affiliated MLD upper MAC sublayer of the AP MLD 2. As illustrated in FIG. 9, the AP MLD1 and the AP MLD2 may also communicate with the DS through the MAC SAP of the MLD common MAC sublayer.

In some embodiments, the first AP MLD and the second AP MLD belong to the same MD within the same ESS, and the third AP MLD is an MD AP MLD.

The first AP MLD and the second AP MLD belong to the same MD in the same ESS, and the transition of an AP MLD between the first AP MLD and the second AP MLD may be defined as the transition between different BSSs in the same MD within the same ESS, that is, from the BSS of one AP MLD to the BSS of another AP MLD. It is to be understood that the transition between non-AP MLDs may be defined as an FT transition.

In the case where the third AP MLD is an MD AP MLD, the transition of the non-AP MLD between the first AP MLD and the second AP MLD may be understood as a fast transition of the non-AP MLD between the first AP MLD and the second AP MLD in the MD AP MLD scenario.

A mobility domain AP MLD (MD AP MLD) may be understood as a roaming AP MLD or an AP MLD (Non-collocated AP MLD) of which affiliated APs are not co-located.

In some embodiments, the first frame includes first information, and the first information includes at least one of first indication information or second indication information.

The first indication information indicates whether the non-AP MLD supports or is allowed to transition between two affiliated AP MLDs of the same MD AP MLD.

The second indication information indicates the third AP MLD.

When the first indication information indicates that the non-AP MLD supports or is allowed to transition between two affiliated AP MLDs of the same MD AP MLD, the non-AP MLD can perform the transition between two affiliated AP MLDs of one MD AP MLD. When the first indication information indicates that the non-AP MLD does not support or is disallowed to transition between two affiliated AP MLDs of the same MD AP MLD, the non-AP MLD cannot transition between two affiliated AP MLDs of one MD AP MLD.

The first indication information may indicate based on different values whether a non-AP MLD supports or is allowed to transition between two affiliated AP MLDs of the same MD AP MLD. In an example, if the value of the first indication information is 1, it indicates that the transition between two AP MLDs affiliated with the same MD AP MLD is supported or allowed; and if the value of the first indication information is 0, it indicates that fast transition between two AP MLDs affiliated with the same MD AP MLD is not supported or allowed, and in such case, the terminal device may transition between two AP MLDs belonging to different MD AP MLDs.

In an embodiment of the present disclosure, the first indication information may be identified as an FT within the mobility domain MLD (FtinMobileDomainMLD).

It will be appreciated that the mobility domain MLD may be replaced with the mobility domain APMLD.

The second indication information indicates the third AP MLD. When the non-AP MLD transitions between two affiliated AP MLDs of the third AP MLD, the second indication information may be defined as an MD AP MLD affiliated with the two affiliated AP MLDs performing the transition.

In an embodiment of the present disclosure, the second indication information may be identified as mobility domain MLD Information (MobileDomainMLD Info).

In the embodiment of the present disclosure, the first indication information and the second indication information in the first frame can indicate whether the non-AP MLD supports or is allowed to transition between two affiliated AP MLDs of one MD AP MLD.

In some embodiments, the first frame includes at least one of the following: a first transition frame, a second transition frame, or a third transition frame.

The first transition frame is used for initiating transition of the non-AP MLD from the first AP MLD to the second AP MLD.

The second transition frame is used for the first AP MLD to synchronize second data to the second AP MLD, the second data is used for maintaining data communication between the non-AP MLD and the first AP MLD or the third AP MLD to maintain continuity of data communication after the non-AP MLD transitions to the second AP MLD.

The third transition frame is used for the non-AP MLD to associate or reassociate with the second AP MLD.

In an embodiment of the present disclosure, transmission or reception of the first transition frame is prior to transmission or reception of the second transition frame, and the transmission or reception of the second transition frame is prior to the transmission or reception of the third transition frame.

For the first transition frame, transition of the non-AP MLD from the first AP MLD to the second AP MLD is initiated through transmission of the first transition frame between the non-AP MLD and the second AP MLD.

The non-AP MLD may directly transmit the first transition frame with the second AP MLD or may transmit the first transition frame with the second AP MLD through the first AP MLD.

In an embodiment of the present disclosure, the non-AP MLD may directly transmit the first transition frame to the second AP MLD, or may transmit the first transition frame to the second AP MLD through the first AP MLD.

In some embodiments, the first transition frame includes: a transition request frame and a transition response frame.

The transition request frame is sent by the non-AP MLD to the second AP MLD, and the transition request frame is used to request transition from the first AP MLD to the second AP MLD.

The transition response frame is sent by the second AP MLD to the non-AP MLD, and the transition response frame is used to respond to the transition request frame.

In some embodiments, the transition request frame may be a fast transition request (FT Request) frame, and the transition response frame may be a fast transition response (FT Response) frame.

In a case that the non-AP MLD directly transmits the first transition frame with the second AP MLD, the non-AP MLD sends a transition request frame to the second AP MLD, and the second AP MLD sends a transition response frame to the non-AP MLD in response to the received transition request frame.

In a case that the non-AP MLD transmits the first transition frame with the second AP MLD through the first AP MLD, the non-AP MLD transmits a transition request frame to the second AP MLD through the first AP MLD, and the second AP MLD transmits a transition response frame to the non-AP MLD through the first AP MLD in response to the received transition request frame.

For the second transition frame, synchronization of the second data of the first AP MLD to the second AP MLD is achieved through transmission of the second transition frame between the non-AP MLD and the first AP MLD or the second AP MLD, such that the non-AP MLD and the second AP MLD continue to perform data communication between the non-AP MLD and the first AP MLD.

The manner of synchronization of the second data may include replication or migration.

In some embodiments, the second transition frame includes at least one of: a first transition confirm frame, a second transition confirm frame, a first transition acknowledgement (ACK) frame, or a second transition ACK frame.

The first transition confirm frame is sent by the non-AP MLD to the first AP MLD, and the first transition confirm frame is used for requesting the first AP MLD to synchronize the second data to the second AP MLD.

The second transition confirm frame is sent by the first AP MLD to the second AP MLD, and the second transition confirm frame is used for the first AP MLD to synchronize the second data to the second AP MLD.

The first transition ACK frame is sent by the first AP MLD to the non-AP MLD, and the first transition ACK frame is used for feeding back synchronization state of the second data.

The second transition ACK frame is sent by the second AP MLD to the first AP MLD, and the second transition ACK frame is used for feeding back the synchronization state of the second data to the first AP MLD.

In the embodiments of the present disclosure, for a non-AP MLD, the second transition frame received or transmitted includes: a first transition confirm frame sent by the non-AP MLD to the first AP MLD, and a first transition ACK frame sent by the first AP MLD to the non-AP MLD.

The first transition confirm frame is used for requesting the first AP MLD to synchronize the second data to the second AP MLD.

The first transition ACK frame is used for feeding back a synchronization state of the second data.

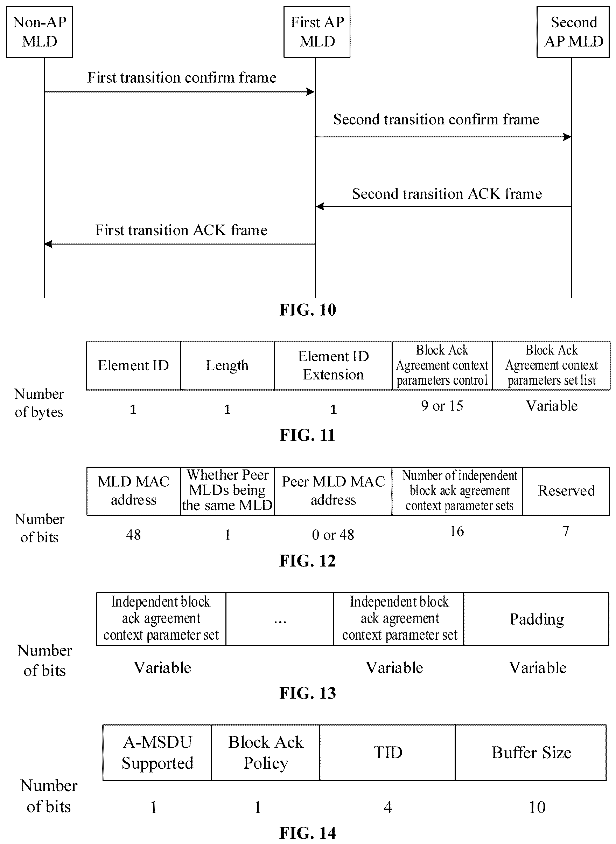

In an embodiment of the present disclosure, as illustrated in FIG. 10, the non-AP MLD transmits a first transition confirm frame to the first AP MLD; the first AP MLD transmits a second transition confirm frame to the second AP MLD in response to the received first transition confirm frame; the second AP MLD transmits a second transition ACK frame to the first AP MLD in response to the received second transition confirm frame; the first AP MLD transmits the first transition ACK frame to the non-AP MLD in response to the received second transition ACK frame.

The first transition confirm frame and the second transition confirm frame are transition confirm frames transmitted on different links. In some embodiments, a transition confirm frame may be understood as a fast transition confirm (FT Confirm) frame.

The first transition ACK frame and the second transition ACK frame are transition ACK frames transmitted on different links. In some embodiments, a transition ACK frame may be understood as a fast transition acknowledgement (FT ACK) frame.

The first transition ACK frame and the second transition ACK frame may carry synchronization state indication information for indicating the synchronization state of the second data, and may also carry second data synchronized by the second AP MLD to indicate the synchronization state of the second data.

In the embodiments of the present disclosure, the second data of the first AP MLD for maintaining data communication between the non-AP MLD and the first AP MLD or the third AP MLD is synchronized to the second AP MLD through the process illustrated in FIG. 10. The second data synchronized here can be understood as a requested resource, so the process illustrated in FIG. 10 can be understood as a resource request process.

In some embodiments, the first transition confirm frame carries third data for the non-AP MLD. The third data is used for maintaining data communication between the non-AP MLD and the first AP MLD or the third AP MLD, and the third data is also used for the first AP MLD to determine the second data.

In the process illustrated in FIG. 10, the first transition confirm frame transmitted by the non-AP MLD to the first AP MLD carries third data of the non-AP MLD, the first AP MLD receives the first transition confirm frame, transmits the second transition confirm frame to the second AP MLD in response to the first transition confirm frame, and carries second data in the second transition confirm frame. The second data carried in the second transition confirm frame may be determined by the first AP MLD based on the received third data.

In an example, the first transition confirm frame transmitted by the non-AP MLD to the first AP MLD carries context information of the corresponding non-AP MLD end in the block acknowledgement (BA) agreement established by the Non-AP MLD and the first AP MLD, and the second transition confirm frame transmitted by the first AP MLD to the second AP MLD carries context information of the corresponding AP MLD end in the BA protocol established by the Non-AP MLD and the first AP MLD.

In an example, the first transition confirm frame transmitted by the Non-AP MLD to the first AP MLD carries context information of the corresponding Non-AP MLD end in the security association mechanism established by the Non-AP MLD and the first AP MLD, and the second transition confirm frame transmitted by the first AP MLD to the second AP MLD carries context information of the corresponding AP MLD end in the security association mechanism established by the Non-AP MLD and the first AP MLD, that is, context information of the first AP MLD.

In some embodiments, the second data includes at least one of: second information or third information.

The second information is information of Block Ack Agreement context of the first AP MLD.

The third information is information of security association context of the first AP MLD.

The Block Ack Agreement context may also be described as Block Acknowledgement Agreement context, Block Ack context and Block Acknowledgement context, which is information of the maintained block acknowledgement procedure.

The security association context may also be described as security association context, which is information of the maintained security association process.

In an embodiment of the present disclosure, the second transition confirm frame indicates the second information and/or the third information.

The first transition ACK frame and/or the second transition ACK frame may also indicate the second information and/or the third information.

In some embodiments, the first transition confirm frame may indicate information for the Block Ack Agreement context and/or security association context in the non-AP MLD such that the first AP MLD determines the second data to be synchronized to the second AP MLD based on the information for the Block Ack Agreement context and/or security association context in the non-AP MLD indicated in the received first transition confirm frame.

For the third transition frame, transmission of the third transition frame between the non-AP MLD and the second AP MLD is performed to associate or reassociate the non-AP MLD with the second AP MLD. In the embodiments of the present disclosure, the third transition frame is used for affiliated AP MLD-level association or reassociation.

In some embodiments, the third transition frame includes at least one of: an association request frame or a reassociation request frame sent by the non-AP MLD to the second AP MLD, or an association response frame or a reassociation response frame sent by the second AP MLD to the non-AP MLD.

After synchronizing the second data between the first AP MLD and the second AP MLD, the non-AP MLD and the second AP MLD are associated or reassociated by the third transition frame to achieve affiliated AP MLD-level association or reassociation.

The non-AP MLD transmits an Association Request frame or a Reassociation Request frame to the second AP MLD, and the second AP MLD transmits an Association Response frame or a Reassociation Response frame to the non-AP MLD in response to the received Association Request frame or Reassociation Request frame.

The non-AP MLD is associated or reassociated with the second AP MLD and then performs data transmission. Data transmission between the non-AP MLD and the first AP MLD may be continued based on the second data synchronized by the second transition frame.

The frame format of the second transition frame provided by the embodiments of the present disclosure will be described below.

The second data used for synchronization in the second transition frame may include information of block ack agreement context and/or information of security association context.

In a scenario that the second data used for synchronization in the second transition frame includes information of block ack agreement context

In some embodiments, the second transition frame includes a block ack agreement context element for indicating information of block ack agreement context.

For the first transition confirm frame, the block ack agreement context element in the first transition confirm frame is used to indicate information of block ack agreement context of the non-AP MLD.

For the second transition confirm frame, the block ack agreement context element in the second transition confirm frame is used to indicate information of block ack agreement context of the first AP MLD.

For the second transition ACK frame or the first transition ACK frame, the block ack agreement context element in the second transition ACK frame or the first transition ACK frame is used to indicate information of block ack agreement context of the second AP MLD. The information of block ack agreement context of the second AP MLD is information of block ack agreement context of the synchronized first AP MLD.

In an embodiment of the present disclosure, the block ack agreement context element includes information about the block ack agreement context that a specific MLD has established with one or more peer MLDs and maintains. It will be appreciated that the block ack agreement context may also be described as block acknowledgement agreement state, or block acknowledgement agreement context or state.

In some embodiments, the block ack agreement context element includes a block ack agreement context parameters control subfield and a block ack agreement context parameters set list subfield.

In one example, as illustrated in FIG. 11, the block ack agreement context element includes the following subfields: Element ID, Length, Element ID Extension, Block ack agreement context parameters control, and Block ack agreement context parameters set list. The element ID field, length field and element ID extension field in the block ack agreement context element adopt the general definition of related elements in the related protocol.

In some embodiments, the block ack agreement context element includes a block ack agreement context parameters control field for indicating at least one of:
a device that hosts the block ack agreement context described by the block ack agreement context element;
whether peer devices targeted by the block ack agreement context of the device described by the block ack agreement context element are the same;
when the peer devices targeted by the block ack agreement context of the device described by the block ack agreement context element are the same, the peer devices for which the block ack agreement context is targeted; or
the number of block ack agreement context parameter sets included in the block ack agreement context element.

The device that hosts the block ack agreement context described by the block ack agreement context element may be the MAC address of the corresponding device.

The device that hosts the block ack agreement context described by the block ack agreement context element may be indicated by a first field in the block ack agreement context parameters control field. The first field in the block ack agreement context parameters control field may be defined as an MLD MAC address subfield indication.

The first field of the block ack agreement context parameters control field in the first transition confirm frame indicates the non-AP MLD.

The first field of the block ack agreement context parameters control field in the second transition confirm frame indicates the first AP MLD.

The first field of the block ack agreement context parameters control field in the second transition ACK frame or the first transition ACK frame indicates the second AP MLD.

The second field in the block ack agreement context parameters control field indicates whether peer devices targeted by the block ack agreement context of the device described by the block ack agreement context element are the same.

In one example, when the value of the second field in the block ack agreement context parameters control field is 0, it indicates that the peer MLDs targeted by the block ack agreement context of the MLD described by the block ack agreement context element are the same, and when the value of the second field is 1, it indicates that the peer MLDs targeted by the block ack agreement context of the MLD described by the block ack agreement context element are not the same, that is, the peer devices include a plurality of MLDs.

The second field in the block ack agreement context parameters control field may be defined as whether peer devices being the same subfield.

In an example, assuming that a STA transitions from AP MLD1 to AP MLD2, in the FT confirm frame transmitted by the STA to AP MLD1, the device described by the block ack agreement context element is the STA, and the peer devices targeted by the block ack agreement context include AP MLD1. In the FT confirm frame sent by the AP MLD1 to the AP MLD2, the device described by the block ack agreement context element includes the AP MLD1, and the peer devices targeted by the block ack agreement context includes the STA. In the FT ACK frame transmitted by the AP MLD2 to the AP MLD1, the device described by the block ack agreement context element is the AP MLD2, and the peer devices targeted by the block ack agreement context includes the STA. In the FT ACK frame transmitted by the AP MLD1 to the STA, the device described by the block ack agreement context element is the AP MLD2, and the peer devices targeted by the block ack agreement context includes the STA.

When the peer devices targeted by the block ack agreement context of the device described by the block ack agreement context element are the same, the peer device targeted by the block ack agreement context may be indicated by a third field in the block ack agreement context parameters control field.

When the peer devices targeted by the block ack agreement context of the device described by the block ack agreement context element are the same, the third field in the block ack agreement context parameters control field indicates the peer device. When the peer devices targeted by the block ack agreement context of the device described by the block ack agreement context element are multiple devices, the block ack agreement context parameters control field may not include the third field.

The third field in the block ack agreement context parameters control field may be defined as a peer device MAC address subfield or a Peer MLD MAC subfield.

The number of independent block ack agreement context parameter set subfields in the block ack agreement context parameters set list field in the block ack agreement context element may be indicated by a fourth field in the block ack agreement context parameters control field.

The fourth field in the block ack agreement context parameters control field may also be understood as indicating the number of independent block ack agreement context parameter set subfields in the block ack agreement context parameters set list field of the block ack agreement context element. An independent block ack agreement context parameter set subfield in one block ack agreement context parameters set list field indicates one block ack agreement context parameter set.

In an example, as illustrated in FIG. 12, the block ack agreement context parameters control field includes the following subfields: MLD MAC address, whether Peer MLDs being the same MLD, Peer MLD MAC address, number of independent block ack agreement context parameter sets, and reserved.

In some embodiments, the block ack agreement context element includes a block ack agreement context parameters set list field, and the block ack agreement context parameters set list field includes at least one block ack agreement context parameter set subfield, i.e. an independent block ack agreement context parameter set subfield. One block ack agreement context parameter set subfield indicates one block ack agreement context parameter set.

The block ack agreement context parameters set list field may include a padding subfield in addition to the block ack agreement context parameter set subfield.

In an example, as illustrated in FIG. 13, the block ack agreement context parameter set subfield includes a plurality of independent block ack agreement context parameter set subfields and a padding subfield.

In some embodiments, the block ack agreement context parameter set subfield is used to indicate at least one of:
the role of the device hosting the corresponding block ack agreement context in the block ack agreement context;
a peer device targeted by the corresponding block ack agreement context;
a block ack parameter set; or
a block ack timeout value.

The role of the device hosting the corresponding block ack agreement context in the block ack agreement context may include an originator and a recipient.

The role of the device hosting the corresponding block ack agreement context in the block ack agreement context may be indicated by a fifth field in the block ack agreement context parameter set subfield. The fifth field in the block ack agreement context parameter set subfield may also be defined as a device role field or an MLD role field.

In one example, when the value of the MLD role field is 0, it indicates that the MLD hosting the block ack agreement context described by the independent block ack agreement context parameter set plays the role of the originator MLD; and when the value of the MLD role field is 1, it indicates that the MLD hosting the block ack agreement context described by the independent block ack agreement context parameter set plays the role of the recipient MLD.

The peer device targeted by the corresponding block ack agreement context may be indicated by a sixth field in the block ack agreement context parameter set subfield.

If the device described in the block ack agreement context is the Non-AP MLD, the peer device targeted by the block ack agreement context is the first AP MLD or the third AP MLD affiliated with the first AP MLD.

If the device described in the block ack agreement context is the first AP MLD or the third AP MLD affiliated with the first AP MLD, the peer device targeted by the block ack agreement context is the Non-AP MLD.

The sixth field of the block ack agreement context parameter set subfield may be defined as a Peer MLD MAC address for indicating the MAC address of the peer device targeted by the corresponding block ack agreement context.

The relevant parameter set of the established block ack agreement corresponding to the block ack agreement context may be indicated by a seventh field in the block ack agreement context parameter set subfield.

The block ack timeout value indicates a duration of information of the current block ack agreement context. If the information of the current block ack agreement context is not frame exchanged within the duration, the information of the current block ack agreement context is invalid.

The block ack timeout value may be indicated by an eighth field in the block ack agreement context parameter set subfield. The eighth field of the block ack agreement context parameter set subfield may also be defined as an ack timeout value field.

In one example, the ack timeout value field contains a duration in units of time unit (TU). If there is no frame exchange sequence within the duration using the block ack agreement, the block ack agreement will terminate after this duration. This field is set to 0 to indicate that the timeout is not enabled.

In some embodiments, the block ack parameter set includes at least one of: third indication information indicating whether an aggregated MAC service data unit (A-MSDU) is supported; a block ack policy; a traffic identifier (TID); or a buffer size.

The third indication information may be indicated by a first subfield in the seventh field of the block ack agreement context parameter set subfield, and the first subfield in the seventh field of the block ack agreement context parameter set subfield may be defined as an A-MSDU supported subfield.

In one example, when the value of the A-MSDU supported subfield is 0, the number of bytes that each buffer can accommodate is equal to the maximum size of the MSDU. When the value of the A-MSDU supported subfield is 1, the number of bytes that each buffer can accommodate is equal to the maximum size of the A-MSDU supported by the STA.

The block ack policy may be indicated by a second subfield in the seventh field of the block ack agreement context parameter set subfield. The second subfield may be defined as a Block Ack Policy subfield.

The TID may be indicated by a third subfield in the seventh field of the block ack agreement context parameter set subfield. The third subfield may be defined as a TID field.

The buffer size may be indicated by a fourth subfield in the seventh field of the block ack agreement context parameter set subfield, and the fourth subfield may be defined as a Buffer Size field.

In one example, as illustrated in FIG. 14, the block ack parameter set subfield includes the following subfields: A-MSDU Supported, Block Ack Policy, TID, and Buffer Size.

In some embodiments, if the block ack agreement context parameter set subfield indicates that the role of the device hosting the corresponding block ack agreement context in the block ack agreement context is the originator, the block ack agreement context parameter set subfield further indicates at least one of: a transmission window starting sequence number or a transmission window size.

The transmission window starting sequence number and the transmission window size are transmit buffer control parameters.

The transmission window size may be understood as the number of buffers available for the respective TIDs.

In some embodiments, the block ack agreement context parameter set subfield may further include a ninth field for indicating a transmission window starting sequence number and a tenth field for indicating a transmission window size.

The ninth field in the block ack agreement context parameter set subfield may be defined as a transmission window starting sequence number (WinStartO) field.

The tenth field in the block ack agreement context parameter set subfield may be defined as a transmission window size (WinSizeO) field.

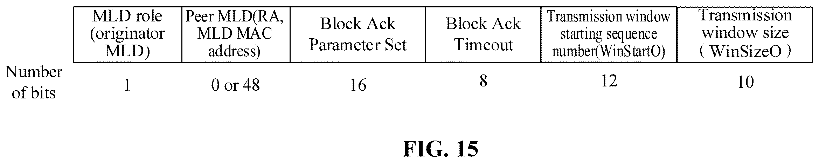

In one example, for the originator, as illustrated in FIG. 15, the block ack agreement context parameter set subfield includes the following fields: MLD role (originator MLD), Peer MLD (RA, MLD MAC address), Block Ack Parameter Set, Block Ack Timeout, Transmission window starting sequence number (WinStartO), and Transmission window size (WinSizeO).

In some embodiments, if the block ack agreement context parameter set subfield indicates that the role of the device hosting the corresponding block ack agreement context in the block ack agreement context is a recipient, and the block ack agreement context parameter set subfield further indicates at least one of: a receive buffer starting sequence number, a receive window size, a record bitmap starting sequence number, a record bitmap maximum sequence number, or a record bitmap size.

The receive buffer starting sequence number (WinStartB) is a Receive Reordering Buffer control parameter for indicating a value of a sequence number subfield of the first MSDU or A-MSDU (in ascending order of sequence number) that has not been received.

The receive buffer starting sequence number (WinStartB) may be indicated by an eleventh field in the block ack agreement context parameter set subfield, and the eleventh field may be defined as a WinStartB field.

The receive window size (WinSizeB) is a Receive Reordering Buffer control parameter for indicating the receive window size.

The receive window size (WinSizeB) may be indicated by a twelfth field in the block ack agreement context parameter set subfield, and the twelfth field may be defined as a WinStartB field.

The record bitmap starting sequence number (WinStartR), which is a Scoreboard Context Control parameter, is a 12-bit unsigned integer starting sequence number and indicates the lowest sequence number position in the block ack record bitmap (indexed by sequence number).

The record bitmap starting sequence number may be indicated by a thirteenth field in the block ack agreement context parameter set subfield. The thirteenth field may be defined as a WinStartR field.

The record bitmap maximum sequence number (WinEndR) indicates the highest sequence number of the current transmission window.

The record bitmap maximum sequence number is indicated by a fourteenth field in the block ack agreement context parameter set subfield, and the fourteenth field may be defined as a WinEndR field.

The record bitmap size (WinSizeR), which is a Scoreboard Context Control parameter, indicates the maximum transmission window size and is set to the smaller of the bitmap length (BitmapLength) and the value of the Buffer size field of the associated response frame for establishing the block return agreement.

The record bitmap size is indicated by a fifteenth field in the block ack agreement context parameter set subfield, and the fifteenth field may be defined as a WinSizeR field.

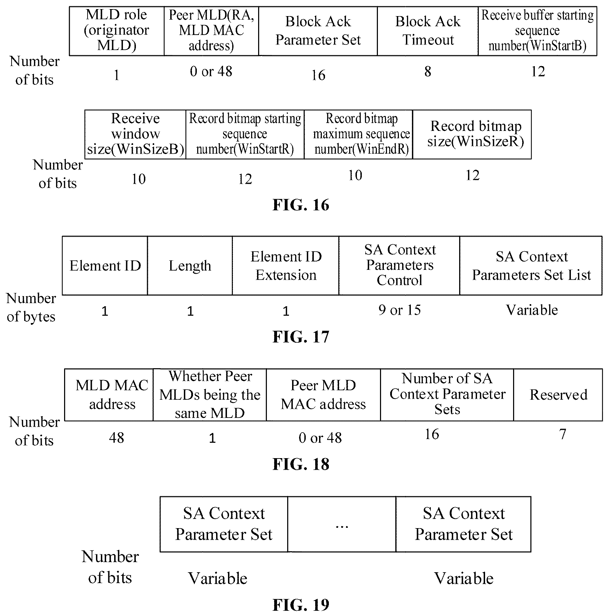

In one example, for the recipient, as illustrated in FIG. 16, the block ack agreement context parameter set subfield includes the following fields: MLD Role (originator MLD), Peer MLD (RA, MLD MAC address), Block Ack Parameter Set, Block Ack Timeout, Receive buffer starting sequence number (WinStartB), Receive window size (WinSizeB), Record bitmap starting sequence number (WinStartR), Record bitmap maximum sequence number (WinEndR), and Record bitmap size (WinSizeR).

In a scenario that the second data for synchronization in the second transition frame includes information of security association context

In some embodiments, the second transition frame includes a security association (SA) context element for indicating information of SA context.

The SA context element includes information for SA that a specific MLD has established with one or more peer MLDs and maintains such as data encryption/decryption and/or integrity protection, packet number (PN) configuration of a verified transmitter, PN counter status information and/or receiver replay detection context, and replay counter status information.

In some embodiments, the SA context element includes an SA context parameters control field and an SA context parameters set list field.

In one example, as illustrated in FIG. 17, the SA context element includes the following subfields: Element ID, Length, Element ID Extension, SA Context Parameters Control, and SA Context Parameters Set List.

In some embodiments, the SA context element includes an SA context parameters control field for indicating at least one of:
a device hosting the SA context described by the SA context element;
whether peer devices targeted by the SA context of the device described by the SA context element are the same;
when the peer devices targeted by the SA context of the device described by the SA context element are the same, the peer devices targeted by the SA context; or
the number of SA context parameter sets included in the SA context element.

The device hosting the SA context described by the SA context element may be the MAC address of the corresponding device.

The device hosting the SA context described by the SA context element may be indicated by a first field in the SA context parameters control field. The first field in the SA context parameters control field may be defined as an MLD MAC address subfield indication.

The first field of the SA context parameters control field in the first transition confirm frame indicates the non-AP MLD.

The first field of the SA context parameters control field in the second transition confirm frame indicates the first AP MLD.

The first field of the SA context parameters control field in the second transition ACK frame or the first transition ACK frame indicates the second AP MLD.

The second field of the SA context parameters control field indicates whether peer devices targeted by the SA context of the device described by the SA context element are the same.

In an example, when the value of the second field of the SA context parameters control field is 0, it indicates that the peer MLDs targeted by the SA context of the MLD described by the SA context element are the same, and when the value of the second field of the SA context parameters control field is 1, it indicates that the peer MLDs targeted by the SA context of the MLD described by the SA context element are a plurality of MLDs.

The second field of the SA context parameters control field may be defined as whether the peer devices being the same subfield.

In an example, assuming that a STA transitions from AP MLD1 to AP MLD2, in the FT confirm frame transmitted by the STA to AP MLD1, the device described by the SA context element is the STA, and the peer devices targeted by the SA context include AP MLD1. In the FT confirm frame transmitted by the AP MLD1 to the AP MLD2, the device described by the SA context element is the AP MLD1, and the peer devices targeted by the SA context include the STA. In the FT ACK frame transmitted by the AP MLD2 to the AP MLD1, the device described by the SA context element is the AP MLD2, and the peer devices targeted by the SA context include the STA. In the FT ACK frame transmitted by the AP MLD1 to the STA, the device described by the SA context element is the AP MLD2, and the peer devices targeted by the SA context include the STA.

When the peer devices targeted by the SA context of the device described by the SA context element are the same, the peer devices targeted by the SA context may be indicated by a third field in the SA context parameters control field.

When the peer devices targeted by the SA context of the device described by the SA context element are the same, the third field of the SA context parameters control field indicates the peer device. The SA context parameters control field may not include the third field when the peer devices targeted by the SA context of the device described by the SA context element are a plurality of devices.

The third field of the SA context parameters control field may be defined as a peer device MAC address subfield or a Peer MLD MAC subfield.

The number of SA context parameter set subfields of the SA context parameters set list field in the SA context element may be indicated by a fourth field in the SA context parameters control field.

The fourth field of the SA context parameters control field may also be understood as indicating the number of SA context parameter set subfields in the SA context parameters set list field of the SA context element. One SA context parameter set subfield in one SA context parameters set list field indicates one SA context parameter set.

In an example, as illustrated in FIG. 18, the SA context parameters control field includes the following subfields: MLD MAC address, whether Peer MLDs being the same MLD, Peer MLD MAC address, number of SA context parameter sets, and reserved.

In some embodiments, the SA context element includes an SA context parameters set list field, and the SA context parameters set list field includes at least one SA context parameter set subfield. One SA context parameter set subfield indicates one SA context parameter set.

In an example, as illustrated in FIG. 19, the SA context parameters set list field includes a plurality of SA context parameter set subfields.

In some embodiments, the SA context parameter set subfield is used to indicate at least one of:
the role of the device hosting the corresponding SA context in the SA context;
a peer device targeted by the corresponding SA context; or
an SA type of the corresponding SA context.

The role of the device hosting the corresponding SA context in the SA context may include a receiver and a transmitter.

The role of the device hosting the corresponding SA context in the SA context may be indicated by a fifth field in the SA context parameter set subfield. The fifth field of the SA context parameter set subfield may also be defined as a device role field or an MLD role field.

In an example, when the value of the MLD role field is 0, it indicates that the MLD hosting the SA context described by the SA context parameter set plays the role of the receiver MLD, that is, the receiver replay context parameter set is described. When the value of the MLD role field is 1, it indicates that the MLD hosting the SA context described by the SA context parameter set plays the role of the transmitter MLD, that is, the transmitter PN counter context parameter set is described.

The peer device targeted by the corresponding SA context may be indicated by a sixth field in the SA context parameter set subfield.

The sixth field of the SA context parameter set subfield may be defined as a Peer MLD MAC address for indicating the MAC address of the peer device for which the corresponding SA context is directed.

If the device described by the SA context is the Non-AP MLD, the peer device targeted by the SA context is the first AP MLD or the third AP MLD affiliated with the first AP MLD.

If the device described by the SA context is the first AP MLD or the third AP MLD affiliated with the first AP MLD, the peer device targeted by the SA context is the Non-AP MLD.

The SA type of the SA context includes one of the following: PTKSA, group temporal key security association (GTKSA), or tunneled direct link setup (TDLS) PeerKey security association (TPKSA).

The SA type of the SA context may be indicated by a seventh field in the SA context parameter set subfield. The seventh field in the SA context parameter set subfield may be defined as a PTKSA/GTKSA/TPKSA field.

The PTKSA/GTKSA/TPKSA field indicates the SA type corresponding to the replay context described by the replay context parameter set subfield. In an example, as illustrated in Table 1, different values of the PTKSA/GTKSA/TPKSA field indicate different SA types. For example, when the PTKSA/GTKSA/TPKSA subfield indicates PTKSA, a replay count value subfield in the replay context parameter set subfield corresponds to the PTKSA replay count value.

**Table 1 Values of PTKSA/GTKSA/TPKSA field and meaning**

| PTKSA/GTKSA/TPKSA field | | Meaning |
|---|---|---|
| | 0 | PTKSA |
| | 1 | GTKSA |
| | 2 | TPKSA |
| | 3 | Reserved |

In some embodiments, if the SA context parameter set subfield is used to indicate that the role of the device hosting the corresponding SA context in the SA context is a receiver, the SA context parameter set subfield further indicates at least one of: the number of replay counters; a TID; or the count of replay counter for the TID.

The number of replay counters may be indicated by an eighth field in the SA context parameter set subfield, and the eighth field may be defined as the number of replay counters field.

The TID may be indicated by a ninth field in the SA context parameter set subfield, and the ninth field may be defined as a TID field.

The count of replay counter for the TID may be indicated by a tenth field in the SA context parameter set subfield, and the tenth field may be defined as the count of replay counter field.

In an embodiment of the present disclosure, according to the number of replay counters indicated by the SA context parameter set subfield, the SA context parameter set subfield includes a corresponding number of TIDs and the count of replay counters for the TIDs.

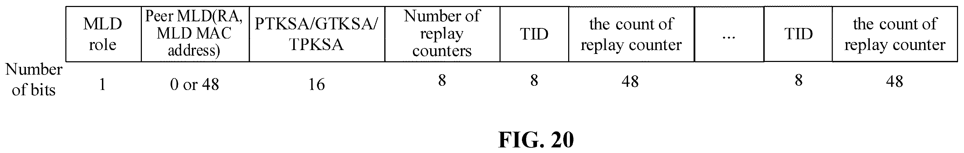

In an example, for a receiver, as illustrated in FIG. 20, the SA context parameter set subfield includes the following fields: MLD role, Peer MLD (RA, MLD MAC address), PTKSA/GTKSA/TPKSA, the number of replay counters, TID, the count of replay counter, ..., TID, the count of replay counter.

In some embodiments, if the SA context parameter set subfield is used to indicate that the role of the device hosting the corresponding SA context in the SA context is a transmitter, the SA context parameter set subfield s further used to indicate at least one of: the number of packet number (PN) counters; a TID; or, the count of PN counter for the TID.

The number of PN counters may be indicated by an eleventh field in the SA context parameter set subfield, and the eleventh field may be defined as the number of PN counters field.

The TID may be indicated by a twelfth field in the SA context parameter set subfield, and the twelfth field may be defined as a TID field.

The count of the PN counter for the TID may be indicated by a thirteenth field in the SA context parameter set subfield, and the thirteenth field may be defined as the count of the PN Counter field.

In an embodiment of the present disclosure, according to the number of PN counters indicated by the SA context parameter set subfield, the SA context parameter set subfield includes a corresponding number of TIDs and the count of PN counters for the TIDs.

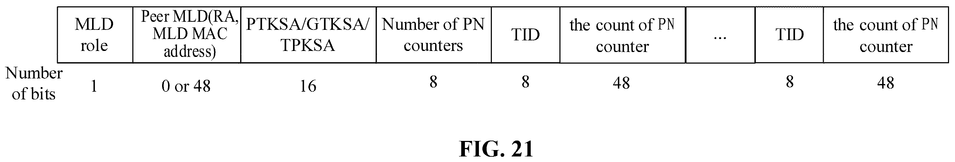

In an example, for a transmitter, as illustrated in FIG. 21, the SA context parameter set subfield includes the following fields: MLD role, Peer MLD (RA, MLD MAC address), PTKSA/GTKSA/TPKSA, the number of PN counters, TID, the count of PN counter, ..., TID, the count of PN counter.

In some embodiments, the second transition frame may further include fourth indication information.

The fourth indication information indicates that the second data includes information about block ack agreement context and/or SA context.

The fourth indication information may be used to indicate a type of resources requested by the second transition frame, and the resource requested by the second transition frame may be understood as a resource type of information included in the second data packet. The resource type may include block ack agreement context and/or SA context.

If the resource type indicated by the fourth indication information includes block ack agreement context, then: a block ack agreement context element is included in a resource request frame (the first transition confirm frame and the second transition confirm frame); and a block ack agreement context element is included in a resource response frame (the first transition ACK frame and the second transition ACK frame).

The non-AP MLD as an FTO transmits a resource request frame carrying a block ack agreement context element to the first AP MLD, requesting to establish the context (or state) related to the block ack agreement at the second AP MLD. After receiving the resource request frame, the first AP MLD copies or migrates the context (or state) of the corresponding block ack agreement currently possessed by the first AP MLD to the second AP MLD, and returns a resource response to the first AP MLD according to the establishment of the context (or state) of the block ack agreement by the second AP MLD, and feeds back the establishment state of the context (or state) of the block ack agreement.

If the resource type indicated by the fourth indication information includes SA context, then: a SA context element is included in the resource request frame (the first transition confirm frame and the second transition confirm frame); and a SA context element is included in the resource response frame (the first transition ACK frame and the second transition ACK frame).

The non-AP MLD as an FTO transmits a resource request frame carrying a SA context element to the first AP MLD, requesting to establish the context (or state) related to SA at the second AP MLD. After receiving the resource request frame, the first AP MLD copies or migrates the context (or state) of the corresponding SA currently possessed by the first AP MLD to the second AP MLD, and returns a resource response to the first AP MLD according to the establishment of the context (or state) related to SA by the second AP MLD, and feeds back the establishment state of the SA context (or state).

In some embodiments, based on the wireless communication method illustrated in FIG. 5, the method further includes the following operation.

The non-AP MLD receives or transmits a second frame. The second frame is used for the non-AP MLD to associate or reassociate with the first AP MLD.

In some embodiments, based on the wireless communication method illustrated in FIG. 6, if the AP MLD is the first AP MLD, the method further includes the following operation.

The AP MLD sends or receives a second frame. The second frame is used for the non-AP MLD to associate or reassociate with the first AP MLD.

The non-AP MLD is associated or reassociated with the first AP MLD by interacting the second frame with the first AP MLD prior to transitioning from the first AP MLD to the second AP MLD.

In some embodiments, the second frame includes first information, and the first information includes at least one of first indication information or second indication information.

The first indication information indicates whether the non-AP MLD supports or is allowed to transition between two affiliated AP MLDs of the same MD AP MLD.

The second indication information indicates the third AP MLD.

The description of the first information may refer to the above description of the first information included in the first frame, which will not be repeated here.

In some embodiments, the first information is in a mobility domain element (MDE).

In an embodiment of the present disclosure, the MDE is included in the first frame and/or the MDE may be included in the second frame.

The first indication information in the first frame is used to determine whether the current non-AP MLD supports or is allowed to transition between different affiliated AP MLDs of the same MD AP MLD, i.e., the third AP MLD, and the second indication information in the second frame is used to determine whether the first AP MLD and the second AP MLD are affiliated with the same MD AP MLD, i.e., the third AP MLD, or the first AP MLD can be associated or reassociated with the second AP MLD, so as to manage or control the transition of the non-AP MLD based on the third AP MLD.

The first information in the second frame is used to determine whether the non-AP MLD is associated or reassociated with the third AP MLD, thereby being associated or reassociated with the first AP MLD affiliated with the third AP MLD.

In some embodiments, the first indication information is in a transition capability and policy field of the MDE.

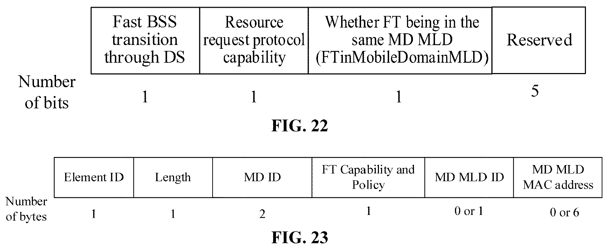

In an example, as illustrated in FIG. 22, the transition capability and policy field includes the following subfields: fast BSS transition through DS, resource request agreement capability, whether FT being in the same MD AP MLD (FTinMobileDomainMLD), and reserved.

In some embodiments, the second indication information includes at least one of a device identifier (ID) of the third AP MLD, or a MAC address of the third AP MLD.

In an embodiment of the present disclosure, the second indication information is optional. In some embodiments, if the first AP MLD and the second AP MLD are affiliated with the same third AP MLD, the first information includes the second indication information.

In an example, as illustrated in FIG. 23, the MDE includes the following fields: Element ID, Length, MD ID, FT Capability and Policy, MD AP MLD ID, MD AP MLD MAC address.

It is understood that each of the fields included in the one-frame format provided by the embodiments of the present disclosure may exist independently, and the fields may be added, modified, or deleted on the basis of the provided frame format according to actual needs.

The wireless communication method provided by the embodiments of the present disclosure will be further described.

The present disclosure proposes a method for transitioning a non-AP MLD (or STA) from a current AP MLD (or AP) to a target AP MLD (or AP) based on the MD AP MLD architecture, which maintains data persistence between the STA and the DS or between the non-AP MLD and the DS by optimizing the FT protocol and utilizing replication, migration or update of relevant communication context and states.

High level architecture for MD AP MLD and affiliated AP MLDs

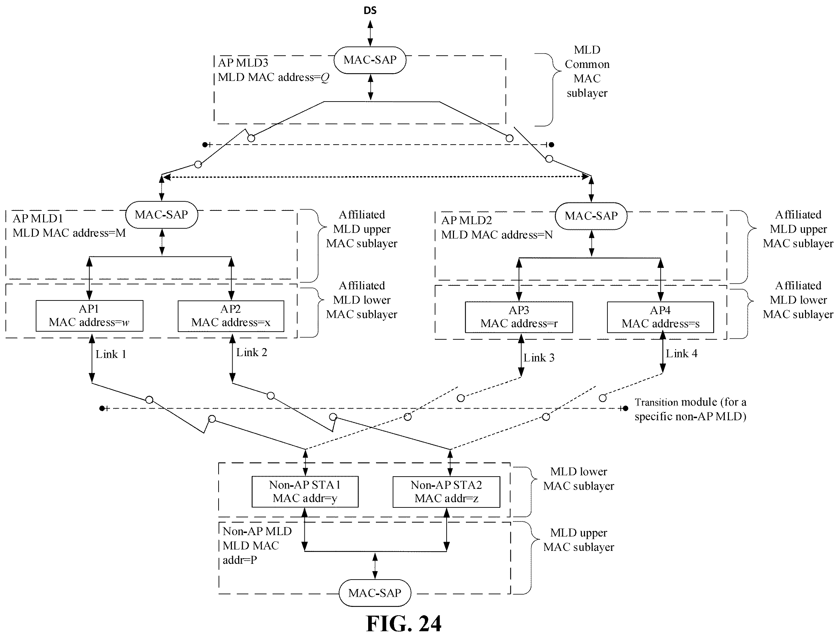

The high level architecture for MD AP MLD and affiliated AP MLDs provided by the embodiments of the present disclosure is illustrated in FIG. 24. Based on the architecture illustrated in FIG. 9, the AP MLD is a Non-AP MLD, the MLD address of the Non-AP MLD is P, and affiliated Non-AP STAs include Non-AP STA1 with a MAC address of y and Non-AP STA2 with a MAC address of z. The Non-AP MLD includes an MLD upper MAC sublayer and an MLD lower MAC sublayer, an affiliated Non-AP STA is in the MLD lower MAC sublayer, and different affiliated Non-AP STAs establish links with affiliated APs of the affiliated AP MLD1 and the affiliated AP MLD2 through different links. A link between the Non-AP STA1 affiliated with the Non-AP SMLD and the affiliate AP1 of the AP MLD1 is Link 1, a link between the Non-AP STA2 affiliated with the Non-AP SMLD and the affiliate AP2 of the AP MLD1 is Link 2, a link between the Non-AP STA1 affiliated with the Non-AP SMLD and the affiliate AP3 of the AP MLD2 is Link 3, and a link between the Non-AP STA2 affiliated with the Non-AP SMLD and the affiliate AP4 of the AP MLD2 is Link 4.

In the embodiments of the present disclosure, when Link 1 or Link 2 are connected, Link 3 and Link 4 are not connected, and as the Non-AP SMLD moves, Link 1 or Link 2 are disconnected, and Link 3 and Link 4 are connected, thereby realizing the transition of the Non-AP SMLD from the AP MLD 1 to the AP MLD 2.

MD AP MLD common MAC sublayer functions include:
1. Providing a distribution system access function (DSAF) to an affiliated AP MLD(s) of the MD AP MLD;
2. Authentication, association, and reassociation functions between the non-AP MLD and the MD AP MLD;
3. Security association (e.g. PMKSA, PTKSA) and manage distribution of GTK/IGTK/BIGTK;
4. Managing partial association and reassociation functions between the non-AP MLD and the corresponding affiliated AP MLD of the MD AP MLD;
5. For an affiliated AP MLD associated with the non-AP MLD, selecting a MAC corresponding to the affiliated AP MLD for data transmission;
6. Synchronization (replication or migration) of all or part of state and buffer information of the Upper-UMAC of the affiliated AP MLD(s) of the MD AP MLD;
7. Performing MLD-level management information exchange/indication through the MAC sublayer of the affiliated MLD.

Synchronization (replication or migration) of all or part of state and buffer information of the Upper-UMAC of the affiliated AP MLD(s) of the MD AP MLD includes:
For a particular non-AP MLD associated with the MD AP MLD, the transition from a current affiliated AP MLD associated with the non-AP MLD of the MD AP MLD to a target affiliated AP MLD of the MD AP MLD involves synchronization (replication or migration) of all or part of state and buffer information of the Upper-UMAC of the current affiliated AP MLD, so as to maintain continuity of the data communication session and persistence of transmitted data during the procedure of the non-AP MLD associating with different affiliated AP MLDs of the MD AP MLD due to roaming.

All or part of state and buffer information of the Upper-UMAC of the affiliated AP MLD of the MD AP MLD, i.e. session or protocol state and buffer information (for a particular non-AP MLD) maintained by data exchange with the particular non-AP MLD, includes:
(1) SN/PN allocation state and associated buffer data of a unicast frame;
(2) SN allocation state and associated buffer data of a group-addressed MAC Service Data Unit (MSDU);
(3) Buffer data for energy saving of individually-addressed frames;
(4) Block Ack session state and associated duplication detection and reordering buffer data;
(5) PN counter state of the transmitter and replay detection state of the receiver and related buffer data.

### Block ACK and SA context and state definition

For the case that a data connectivity-oriented non-AP MLD (or STA) makes a fast transition from a current AP MLD (or AP) to a target AP MLD (or AP), communication context and state-related elements or fields are defined, including Block Ack context or state elements and SA context or state elements, which are used for duplication, migration or update of block ACK and SA context and states in the FT process respectively.

FT protocol optimization and update to frame type and format definition and functions for interactive frames

The data connectivity-oriented FT protocol optimization and update to frame type and format definition and functions of interactive frames based on the MD AP MLD architecture includes: update to the definitions of an MDE, association and reassociation protocol, association frame and reassociation frame, FT request and response protocol, FT resource request and response protocol, update to the definitions of frames such as FT Request frame, FT Response frame, FT Confirm frame, FT ACK frame.

The data persistence-based FT protocol includes the following procedures.
(1) The Non-AP MLD is associated with the current AP MLD and performs MD AP MLD context association or FT initial MD AP MLD context association.
(2) The Non-AP MLD initiates an FT procedure from the current AP MLD to the target AP MLD in the MD AP MLD context.
(3) For the Non-AP MLD, the MD AP MLD context, state, and/or all or part of the context, state, buffer of the corresponding affiliated MLD of the MD AP MLD are replicated or migrated from the current AP MLD to the target AP MLD.
(4) The Non-AP MLD is reassociated with the target AP MLD in the MD AP MLD context.

The non-AP MLD being associated with an AP MLD in the MD AP MLD context (or referred as the non-AP MLD being associated with an AP MLD affiliated with the MD AP MLD) refers to establishing a mapping relationship between the AP MLD affiliated with the MD AP MLD and the non-AP MLD (including the mapping relationship between the MD AP MLD and the AP MLD and the mapping relationship between the AP MLD and the non-AP MLD), to enable the non-AP MLD to call the DSS(s). The non-AP MLD establishes an SA (e.g., PMKSA, PTKSA) with the MD AP MLD, when the non-AP MLD transitions from the current AP MLD affiliated with the MD AP MLD to the target AP MLD affiliated with the MD AP MLD in the MD AP MLD context, the PMKSA and the PTKSA may remain unchanged, that is, the non-AP MLD maintains a unicast key when transitioning from the current AP MLD affiliated with the MD AP MLD to the target AP MLD affiliated with the MD AP MLD in the MD AP MLD context, including maintaining the same pairwise master key (PMK) and the same pairwise temporal key (PTK).

The wireless communication method provided by the embodiments of the present disclosure can be implemented including, but not limited to, the following embodiments.

An AP MLD affiliated with a specific MD AP MLD carries information of the MD AP MLD with which the AP MLD is affiliated (such as an identifier of the MD AP MLD or a MAC address of the MD AP MLD) in a management frame transmitted by the AP MLD such as a beacon frame or a probe frame, and/or carries an MDE to indicate whether the AP MLD supports BSS transition in the same MD AP MLD context.

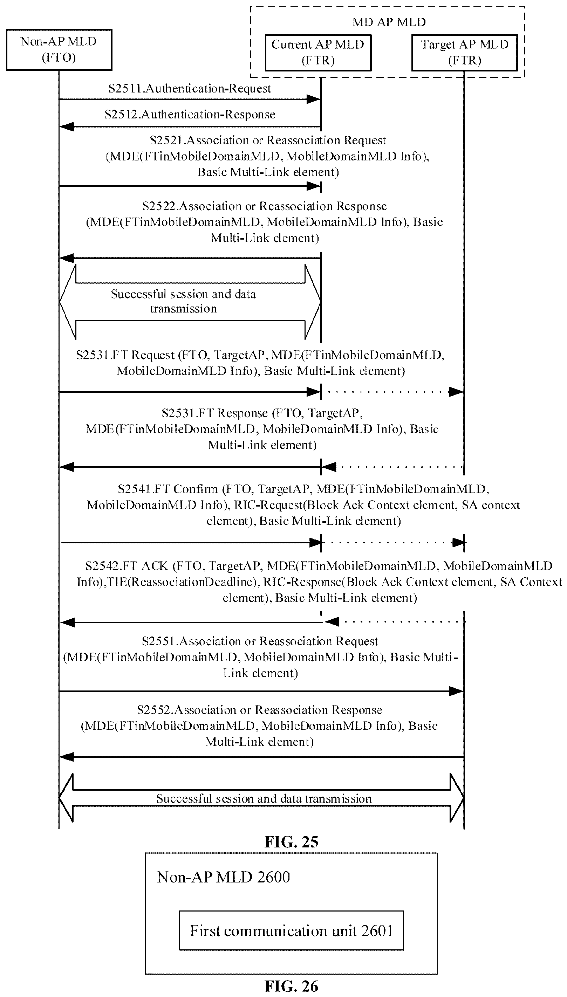

In the embodiments of the present disclosure, the Non-AP MLD authenticates with the current AP MLD, as illustrated in FIG. 25, including the following operations.

In S2511, the Non-AP MLD sends an Authentication-Request frame to the current AP MLD (FTR).

In S2512, the current AP MLD (FTR) sends an Authentication-Response frame to the Non-AP MLD.

The data connectivity-oriented FT protocol optimization and update to frame type and format definition and functions of interactive frames based on the MD AP MLD architecture includes: update to the definitions of an MDE, association and reassociation protocol, association frame and reassociation frame, FT request and response protocol, FT resource request and response protocol, update to the definitions of frames such as FT Request frame, FT Response frame, FT Confirm frame, FT ACK frame.
(1) The Non-AP MLD is associated with the current AP MLD and performs MD AP MLD context association or FT initial MD AP MLD context association, which includes the following as illustrated in FIG. 25.

In S2521, the Non-AP MLD transmits an association request frame or a reassociation request frame to the current AP MLD (FTR).

In S2522, the current AP MLD (FTR) feeds back an association response frame or a reassociation response frame to the Non-AP MLD.

The association or reassociation request frame and the association or reassociation response frame include an MDE and a Basic Multi-Link element. The MDE may be labeled as an MDE (FTinMobileDomainMLD, MobileDomainMLD Info), which represents that the MDE carries the first indication information FTinMobileDomainMLD and the second indication information MobileDomainMLD Info.

It is understood that the association request frame or the reassociation request frame carries an updated MDE (FTinMobileDomainMLD, MobileDomainMLD Info information field), indicating association of the non-AP MLD with the AP MLD in the MD AP MLD context (or the non-AP MLD is associated with the AP MLD affiliated with the MD AP MLD), and indicating that fast transition between two AP MLDs affiliated with the same MD AP MLD is supported or allowed.

The non-AP MLD is associated with the current AP MLD in the MD AP MLD context, and can establish successful session and data transmission with the current AP MLD.

(2) The Non-AP MLD initiates an FT procedure from the current AP MLD to the target AP MLD in the MD AP MLD context.

When the Non-AP MLD (FTO) determines that it is necessary to transition from the current AP MLD to the target AP MLD in the MD AP MLD context, the FTO sends a fast transition request frame to the target FTR through the current FTR, and then the target AP MLD (FTR) feeds back a fast transition response frame to the Non-AP MLD through the current AP MLD (FTR).

As illustrated in FIG. 25, the following operations are included.

In S2531, the Non-AP MLD transmits an FT request frame to the target AP MLD through the current AP MLD.

The FT request frame is FT Request(FTO, TargetAP, MDE(FTinMobileDomainMLD, MobileDomainMLD Info), Basic Multi-Link element).

In S2532, the target AP MLD transmits an FT response frame to the Non-AP MLD through the current AP MLD.

FT Response(FTO, TargetAP, MDE(FTinMobileDomainMLD, MobileDomainMLD Info), Basic Multi-Link element).

The FT request frame and the FT response frame carry an updated MDE(FTinMobileDomainMLD, MobileDomainMLD Info information field) indicating that fast transition between two AP MLDs affiliated with the same MD AP MLD is supported or allowed.

(3) For the Non-AP MLD, the MD AP MLD context, state, and/or all or part of the context, state, buffer of the corresponding affiliated MLD of the MD AP MLD are replicated or migrated from the current AP MLD to the target AP MLD.

The FTO transmits an FT Confirm frame to the target FTR through the current FTR, and then the target AP MLD (FTR) feeds back an FT ACK frame to the Non-AP MLD through the current AP MLD (FTR).

As illustrated in FIG. 25, the following operations are included.

In S2541, the Non-AP MLD transmits an FT confirm frame to the current AP MLD, and the current AP MLD transmits an FT confirm frame to the target AP MLD.

The FT confirm frame is an FT Confirm(FTO, TargetAP, MDE(FTinMobileDomainMLD, MobileDomainMLD Info), Resource information container (RIC)-Request(Block Ack Context element, SA context element), Basic Multi-Link element), indicating that the FT confirm frame is used for requesting resources, and the requested resources are carried in the RIC-Request.

For the FT confirm frame transmitted by the Non-AP MLD to the current AP MLD, the Block Ack Context element carries context information of the non-AP MLD side corresponding to the BA agreement that the non-AP MLD requests context information synchronization from the current AP MLD to the target AP MLD, and the SA context element carries context information of the non-AP MLD side corresponding to the SA mechanism that the non-AP MLD requests context information synchronization from the current AP MLD to the target AP MLD.

For the FT confirm frame transmitted by the current AP MLD to the target AP MLD, the Block Ack Context element carries context information of the AP MLD side corresponding to a BA ack agreement that completes context information synchronization from the current AP MLD to the target AP MLD in response to the non-AP MLD's request, and the SA context element carries context information of the AP MLD side corresponding to the SA mechanism that completes context information synchronization from the current AP MLD to the target AP MLD in response to the non-AP MLD's request.

In S2542, the target AP MLD transmits an FT ACK frame to the current AP MLD, and the current AP MLD transmits an FT ACK frame to the Non-AP MLD.

The FT ACK frame is FT ACK(FTO, TargetAP, MDE(FTinMobileDomainMLD, MobileDomainMLD Info), Time Element (TIE)(ReassociationDeadline), RIC-Response(Block Ack Context element, SA Context element, Basic Multi-Link element), indicating the time limit for the FT ACK frame to perform the resource response and reassociation, and the responded resources are carried in the RIC-Response.

The FT Confirm and FT ACK carry the Block Ack Context element and the SA Context element, which indicates the relevant block ack agreement context (or state) information and SA context (or state) information.

For the FT ACK frame, the Block Ack Context element carries context information of the AP MLD side corresponding to the BA ack agreement that completes context information synchronization from the current AP MLD to the target AP MLD in response to the non-AP MLD's request, and the SA context element carries context information of the AP MLD side corresponding to the SA mechanism that completes context information synchronization from the current AP MLD to the target AP MLD in response to the non-AP MLD's request, thereby feeding back the synchronization result.

(4) The Non-AP MLD is reassociated with the target AP MLD in the MD AP MLD context.

The Non-AP MLD sends an association request frame or a reassociation request frame to the target AP MLD (FTR), and then the target AP MLD (FTR) feeds back an association response frame or a reassociation response frame to the Non-AP MLD. A successful reassociation occurs only when the time interval between the transmission time of the FT request frame and the transmission time of the reassociation request frame does not exceed the reassociation deadline.

As illustrated in FIG. 25, the following operations are included.

In S2551, the Non-AP MLD sends an association request frame or a reassociation request frame to the target AP MLD (FTR).

The association request frame or the reassociation request frame is (Re)Association Request (MDE(FTinMobileDomainMLD, MobileDomainMLD Info), Basic Multi-Link element).

In S2552, the target AP MLD (FTR) feeds back an association response frame or a reassociation response frame to the Non-AP MLD.

The association response frame or the reassociation response frame is (Re)Association Response(MDE(FTinMobileDomainMLD, MobileDomainMLD Info), Basic Multi-Link element).

The association request frame or reassociation request frame carries an updated MDE(FTinMobileDomainMLD, MobileDomainMLD Info information field), indicating that the non-AP MLD associates the target AP MLD in the MD AP MLD context (or the non-AP MLD is associated with the target AP MLD affiliated with the MD AP MLD) and indicating that fast transition between two AP MLDs affiliated with the same MD AP MLD is supported.

The non-AP MLD being associated with an AP MLD in the MD AP MLD context (or referred as the non-AP MLD being associated with an AP MLD affiliated with the MD AP MLD) refers to establishing a mapping relationship between the AP MLD affiliated with the MD AP MLD and the non-AP MLD (including the mapping relationship between the MD AP MLD and the AP MLD and the mapping relationship between the AP MLD and the non-AP MLD), to enable the non-AP MLD to call the DSS(s). The non-AP MLD establishes an SA (e.g., PMKSA, PTKSA) with the MD AP MLD, when the non-AP MLD transitions from the current AP MLD affiliated with the MD AP MLD to the target AP MLD affiliated with the MD AP MLD in the MD AP MLD context, the PMKSA and the PTKSA may remain unchanged, that is, the non-AP MLD maintains a unicast key when transitioning from the current AP MLD affiliated with the MD AP MLD to the target AP MLD affiliated with the MD AP MLD in the MD AP MLD context, including maintaining the same pairwise master key (PMK) and the same pairwise temporal key (PTK).

Although the existing fast BSS transition (FT) can reduce the length of time during which connectivity is lost between the STA and the DS or between the non-AP MLD and the DS during the BSS transition, data persistence/continuity between the STA and the DS or between the non-AP MLD and the DS cannot be maintained because the STA (or Non-AP MLD) needs to reassociate and reestablish the agreement and context of data transmission and reception when transitioning to the target AP (or target AP MLD). The present disclosure proposes a method for transitioning a non-AP MLD (or STA) from a current AP MLD (or AP) to a target AP MLD (or AP) based on the MD AP MLD architecture, which maintains data persistence between the STA and the DS or between the non-AP MLD and the DS by optimizing the FT protocol and utilizing replication, migration or update of relevant communication context and states.

In the embodiments of the present disclosure, in the embodiment illustrated in FIG. 25, the current AP MLD and the target AP MLD are affiliated with the same MD AP MLD, and the transition (FT) mechanism illustrated in FIG. 25 is also applicable to the transition of the non-AP MLD from the current AP MLD to the target AP MLD when the current AP MLD and the target AP MLD are affiliated with different MD AP MLDs. The difference is that when the current AP MLD and the target AP MLD are affiliated with the same MD AP MLD, the second data is synchronized between different affiliated AP MLDs of the same MD AP MLD; if the current AP MLD and the target AP MLD are affiliated with different MD AP MLDs, the second data is synchronized between affiliated AP MLDs of different MD AP MLDs.

It should be noted that the above embodiments describe a transition (FT) mechanism of the non-AP MLD from the current AP MLD to the target AP MLD in the MD AP MLD context, and the wireless communication method provided in the present disclosure is also applicable to the transition (FT) mechanism of a non-MLD STA from the current AP to the target AP in the MD AP MLD context.

Although the existing FT can reduce the length of time during which connectivity is lost between the STA and the DS or between the non-AP MLD and the DS during the BSS transition, data persistence/continuity between the STA and the DS or between the non-AP MLD and the DS cannot be maintained because the STA (or Non-AP MLD) needs to reassociate and reestablish the agreement and context of data transmission and reception when transitioning to the target AP (or target AP MLD). According to the wireless communication method provided by the embodiments of the present disclosure, a non-AP MLD (or STA) transitions from a current AP MLD (or AP) to a target AP MLD (or AP) in the MD AP MLD architecture, data persistence/continuity between the STA and the DS or between the non-AP MLD and the DS can be maintained by optimizing the FT protocol and utilizing replication, migration or update of relevant communication context and states.

The wireless communication method according to the embodiments of the present disclosure:
1. Propose a high-level architecture for a MD AP MLD with affiliated AP MLDs and a Non-AP MLD in which a data connectivity-oriented non-AP MLD (or STA) makes a fast transition from a current AP MLD (or AP) to a target AP MLD (or AP) based on the MD AP MLD architecture;
2. For the case that a data connectivity-oriented non-AP MLD (or STA) makes a fast transition from a current AP MLD (or AP) to a target AP MLD (or AP), communication context and state-related elements or fields are defined, mainly including Block Ack context or state elements and SA context or state elements, which are used for duplication, migration or update of block ACK and SA context and states in the FT process respectively;
2. Propose the data connectivity-oriented FT protocol optimization and update to frame type and format definition and functions of interactive frames based on the MD AP MLD architecture, including: update to the definitions of an MDE, association and reassociation protocol, association frame and reassociation frame, FT request and response protocol, FT resource request and response protocol, update to the definitions of frames such as FT Request frame, FT Response frame, FT Confirm frame, FT ACK frame.

Preferred embodiments of the present disclosure have been described in detail with reference to the accompanying drawings, but the present disclosure is not limited to the specific details of the above embodiments. Within the scope of the technical conception of the present disclosure, various simple modifications may be made to the technical solutions of the present disclosure, and these simple modifications all fall within the scope of protection of the present disclosure. For example, specific technical features described in the above specific embodiments may be combined in any suitable manner without contradiction, and various possible combinations are not further described in the present disclosure in order to avoid unnecessary repetition. For another example, various different implementations of the present disclosure may be combined arbitrarily as long as the combination does not depart from the idea of the present disclosure, and the combination should be regarded as the contents of the present disclosure. For another example, various embodiments and/or the technical features of the various embodiments in the present disclosure may be combined with the related art in any manner without conflict, and the resulting technical solutions shall also fall within the scope of protection of the present disclosure.

It is to be understood that, in various method embodiments of the present disclosure, a magnitude of a sequence number of each process does not mean an execution sequence and the execution sequence of each process should be determined by its function and an internal logic and should not form any limit to an implementation process of the embodiments of the present disclosure. Furthermore, in the embodiments of the present disclosure, the terms "downlink", "uplink" and "sidelink" are used to indicate a direction of transmission of signals or data, "downlink" is used to indicate that the signal or data is transmitted in a first direction from a station to user equipment (UE) of a cell, "uplink" is used to indicate that the signal or data is transmitted in a second direction from UE of a cell to a station, and "sidelink" is used to indicate that the signal or data is transmitted in a third direction from UE1 to UE2. For example, a "downlink signal" indicates that the signal is transmitted in the first direction. Further, in the embodiments of the present disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the present disclosure usually represents that previous and next associated objects form an "or" relationship.

FIG. 26 is a schematic diagram of structural composition of a non-AP MLD according to an embodiment of the present disclosure. As illustrated in FIG. 26, the non-AP MLD 2600 includes a first communication unit 2601.

The first communication unit 2601 is configured to receive or transmit a first frame. The first frame is used for the non-AP MLD to transition between a first AP MLD and a second AP MLD, the first AP MLD and the second AP MLD are affiliated with a third AP MLD, and the third AP MLD is a logical AP MLD.

It is understood that the non-AP MLD further includes a processing unit and a storage unit. The processing unit is configured to parse the first frame or generate the first frame, and the storage unit is configured to store information carried by the first frame.

In some embodiments, the first AP MLD is an AP MLD whose affiliated APs are co-located, and the second AP MLD is an AP MLD whose affiliated APs are co-located.

In some embodiments, the third AP MLD is used for at least one of: providing connection services between the non-AP MLD or an affiliated AP MLD and a DS; maintaining data continuity of the non-AP MLD when performing transition between the first AP MLD and the second AP MLD during roaming; authentication and/or association or reassociation of the non-AP MLD; security association (SA) of the non-AP MLD; distribution of all or part of SA information of the non-AP MLD; synchronization of all or part of states and/or buffer information of upper-upper Medium Access Control (upper-UMAC) of affiliated AP MLDs; managing distribution of authentication information for a link of the non-AP MLD; managing affiliated AP MLD-level association or reassociation between the non-AP MLD and an affiliated AP MLD; selecting, for a target AP MLD among at least one affiliated AP MLD that establishes a multi-link with the non-AP MLD, a MAC corresponding to the target AP MLD for transmission; synchronization of first data among different affiliated AP MLDs, in which the first data is used to maintain data continuity of communication between the non-AP MLD and the affiliated AP MLD or the DS; or exchange or indication of MLD-level information through a MAC sublayer of the affiliated AP MLD.

In some embodiments, the first AP MLD and the second AP MLD belong to the same MD within the same ESS, and the third AP MLD is an MD AP MLD.

In some embodiments, the first frame includes first information, and the first information includes at least one of first indication information or second indication information.

The first indication information indicates whether the non-AP MLD supports or is allowed to transition between two affiliated AP MLDs of the same MD AP MLD.

The second indication information indicates the third AP MLD.

In some embodiments, the first frame includes at least one of a first transition frame, first transition frame, or a third transition frame.

The first transition frame is used for initiating transition of the non-AP MLD from the first AP MLD to the second AP MLD.

The second transition frame is used for the first AP MLD to synchronize second data to the second AP MLD. The second data is used for maintaining data communication between the non-AP MLD and the first AP MLD or the third AP MLD to maintain continuity of data communication after the non-AP MLD transitions to the second AP MLD.

The third transition frame is used for the non-AP MLD to associate or reassociate to the second AP MLD.

In some embodiments, the first transition frame includes at least one of a transition request frame or a transition response frame.

The transition request frame is sent by the non-AP MLD to the second AP MLD and used to request transition from the first AP MLD to the second AP MLD.

The transition response frame is sent by the second AP MLD to the non-AP MLD and used to respond to the transition request frame.

In some embodiments, the second transition frame includes at least one of a first transition confirm frame or a first transition acknowledgement (ACK) frame.

The first transition confirm frame is sent by the non-AP MLD to the first AP MLD and used for requesting the first AP MLD to synchronize the second data to the second AP MLD.

The first transition ACK frame is sent by the first AP MLD to the non-AP MLD and used for feeding back a synchronization state of the second data.

In some embodiments, the first transition confirm frame carries third data of the non-AP MLD, the third data is used to maintain data communication between the non-AP MLD and the first AP MLD or the third AP MLD, and the third data is further used by the first AP MLD to determine the second data.

In some embodiments, the third transition frame includes at least one of an association request frame or a reassociation request frame sent by the non-AP MLD to the second AP MLD, or an association response frame or a reassociation response frame sent by the second AP MLD to the non-AP MLD.

In some embodiments, the second data includes at least one of second information or third information.

The second information is information of block ack agreement context of the first AP MLD.

The third information is information of SA context of the first AP MLD.

In some embodiments, the second transition frame includes a block ack agreement context element for indicating information of the block ack agreement context.

In some embodiments, the block ack agreement context element includes a block ack agreement context parameters control field, and the block ack agreement context parameters control field indicates at least one of: a device hosting the block ack agreement context described by the block ack agreement context element; whether peer devices targeted by the block ack agreement context of the device described by the block ack agreement context element are the same; the peer device targeted by the block ack agreement context in a case that the peer devices targeted by the block ack agreement context of the device described by the block ack agreement context element are the same; or, a number of block ack agreement context parameter sets included in the block ack agreement context element.

In some embodiments, the block ack agreement context element includes a block ack agreement context parameters set list field, and the block ack agreement context parameters set list field includes at least one block ack agreement context parameter set subfield, and one block ack agreement context parameter set subfield indicates one block ack agreement context parameter set.

In some embodiments, the block ack agreement context parameter set subfield indicates at least one of: a role of the device hosting the corresponding block ack agreement context in the block ack agreement context; a peer device targeted by the corresponding block ack agreement context; a block ack parameter set; or a block ack timeout value.

In some embodiments, if the block ack agreement context parameter set subfield indicates that the role of the device hosting the corresponding block ack agreement context in the block ack agreement context is an originator, the block ack agreement context parameter set subfield further indicates at least one of a transmission window starting sequence number or a transmission window size.

In some embodiments, if the block ack agreement context parameter set subfield indicates that the role of the device hosting the corresponding block ack agreement context in the block ack agreement context is a recipient, the block ack agreement context parameter set subfield further indicates at least one of a receive buffer starting sequence number, a receive window size, a record bitmap starting sequence number, a record bitmap maximum sequence number, or a record bitmap size.

In some embodiments, the block ack parameter set includes at least one of: third indication information indicating whether an aggregated MAC service data unit (A-MSDU) is supported; a block ack policy; a traffic identifier (TID); or a buffer size.

In some embodiments, the second transition frame includes an SA context element for indicating information of SA context.

In some embodiments, the SA context element includes an SA context parameters control field, and the SA context parameters control field indicates at least one of: a device hosting the SA context described by the SA context element; whether peer devices targeted by the SA context of the device described by the SA context element are the same; the peer device targeted by the SA context in a case that the peer devices targeted by the SA context of the device described by the SA context element are the same; or a number of SA context parameter sets included in the SA context element.

In some embodiments, the SA context element includes an SA context parameters set list field, and the SA context parameters set list field includes at least one SA context parameter set subfield, and one SA context parameter set subfield indicates one SA context parameter set.

In some embodiments, the SA context parameter set subfield indicates at least one of: a role of the device hosting the corresponding SA context in the SA context; a peer device targeted by the corresponding SA context; or an SA type of the corresponding SA context.

In some embodiments, if the SA context parameter set subfield indicates that the role of the device hosting the corresponding SA context in the SA context is a receiver, the SA context parameter set subfield further indicates at least one of: a number of replay counters; a TID; or a count of replay counter for the TID.

In some embodiments, if the SA context parameter set subfield indicates that the role of the device hosting the corresponding SA context in the SA context is a transmitter, the SA context parameter set subfield further indicates at least one of: a number of PN counters; a TID; or a count of PN counter for the TID.

In some embodiments, the second transition frame further includes fourth indication information. The fourth indication information is used for indicating that the second data includes information about block ack agreement context and/or SA context.

In some embodiments, the first communication unit 2601 is further configured to receive or transmit a second frame.

The second frame is used for the non-AP MLD to associate or reassociate with the first AP MLD.

In some embodiments, the second frame includes first information, and the first information includes at least one of first indication information or second indication information.

The first indication information indicates whether the non-AP MLD supports or is allowed to transition between two affiliated AP MLDs of the same MD AP MLD.

The second indication information indicates the third AP MLD.

In some embodiments, the first information is in an MDE.

In some embodiments, the first indication information is in a transition capability and policy field of the MDE.

In some embodiments, the second indication information includes at least one of a device identifier of the third AP MLD or a MAC address of the third AP MLD.

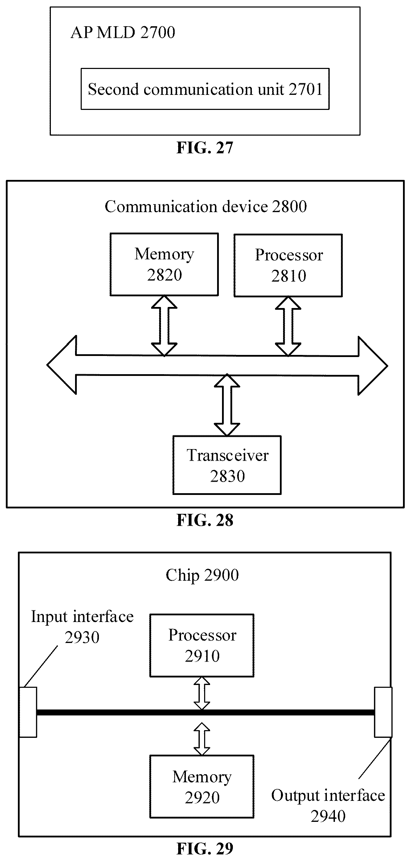

FIG. 27 is a schematic diagram of structural composition of an AP MLD according to an embodiment of the present disclosure. As illustrated in FIG. 27, the AP MLD 2700 includes a second communication unit 2701.

The second communication unit 2701 is configured to transmit or receive a first frame. The first frame is used for a non-AP MLD to transition between a first AP MLD and a second AP MLD, the first AP MLD and the second AP MLD are affiliated with a third AP MLD, the third AP MLD is a logical AP MLD, and the AP MLD is the first AP MLD or the second AP MLD.

It is understood that the AP MLD further includes a processing unit and a storage unit. The processing unit is configured to parse the first frame or generate the first frame, and the storage unit is configured to store information carried by the first frame.

In some embodiments, the first AP MLD is an AP MLD whose affiliated APs are co-located, and the second AP MLD is an AP MLD whose affiliated APs are co-located.

In some embodiments, the third AP MLD is used for at least one of: providing connection services between the non-AP MLD or an affiliated AP MLD and a DS; maintaining data continuity of the non-AP MLD when performing transition between the first AP MLD and the second AP MLD during roaming; authentication and/or association or reassociation of the non-AP MLD; SA of the non-AP MLD; distribution of all or part of SA information of the non-AP MLD; synchronization of all or part of states and/or buffer information of the upper-UMAC of affiliated AP MLDs; managing distribution of authentication information for a link of the non-AP MLD; managing affiliated AP MLD-level association or reassociation between the non-AP MLD and an affiliated AP MLD; selecting, for a target AP MLD among at least one affiliated AP MLD that establishes a multi-link with the non-AP MLD, a MAC corresponding to the target AP MLD for transmission; synchronization of first data among different affiliated AP MLDs, in which the first data is used to maintain data continuity of communication between the non-AP MLD and the affiliated AP MLD or the DS; or exchange or indication of MLD-level information through a MAC sublayer of the affiliated AP MLD.

In some embodiments, the first AP MLD and the second AP MLD belong to the same MD within the same ESS, and the third AP MLD is an MD AP MLD.

In some embodiments, the first frame includes first information, and the first information includes at least one of first indication information or second indication information.

The first indication information indicates whether the non-AP MLD supports or is allowed to transition between two affiliated AP MLDs of the same MD AP MLD.

The second indication information indicates the third AP MLD.

In some embodiments, the first frame includes at least one of a first transition frame, a second transition frame, or a third transition frame.

The first transition frame is used for initiating transition of the non-AP MLD from the first AP MLD to the second AP MLD.

The second transition frame is used for the first AP MLD to synchronize second data to the second AP MLD. The second data is used for maintaining data communication between the non-AP MLD and the first AP MLD or the third AP MLD to maintain continuity of data communication after the non-AP MLD transitions to the second AP MLD.

The third transition frame is used for the non-AP MLD to associate or reassociate with the second AP MLD.

In some embodiments, the first transition frame includes at least one of a transition request frame or a transition response frame.

The transition request frame is sent by the non-AP MLD to the second AP MLD and used to request transition from the first AP MLD to the second AP MLD.

The transition response frame is sent by the second AP MLD to the non-AP MLD and used to respond to the transition request frame.

In some embodiments, the second transition frame includes at least one of a first transition confirm frame, a second transition confirm frame, a first transition acknowledgement (ACK) frame, or a second transition ACK frame.

The first transition confirm frame is sent by the non-AP MLD to the first AP MLD and used for requesting the first AP MLD to synchronize the second data of the first AP MLD to the second AP MLD.

The second transition confirm frame is sent by the first AP MLD to the second AP MLD and used for the first AP MLD to synchronize the second data to the second AP MLD.

The first transition ACK frame is sent by the first AP MLD to the non-AP MLD and used to feed back a synchronization state of the second data to the non-AP MLD.

The second transition ACK frame is sent by the second AP MLD to the first AP MLD and used to feed back a synchronization state of the second data to the first AP MLD.

In some embodiments, the first transition confirm frame carries third data of the non-AP MLD, the third data is used to maintain data communication between the non-AP MLD and the first AP MLD or the third AP MLD, and the third data is further used by the first AP MLD to determine the second data.

In some embodiments, the third transition frame includes at least one of an association request frame or a reassociation request frame sent by the non-AP MLD to the second AP MLD, or an association response frame or a reassociation response frame sent by the second AP MLD to the non-AP MLD.

In some embodiments, the second data includes at least one of second information or third information.

The second information is information of block ack agreement context of the first AP MLD.

The third information is information of SA context of the first AP MLD.

In some embodiments, the second transition frame includes a block ack agreement context element for indicating information of the block ack agreement context.

In some embodiments, the block ack agreement context element includes a block ack agreement context parameters control field, and the block ack agreement context parameters control field indicates at least one of: a device hosting the block ack agreement context described by the block ack agreement context element; whether peer devices targeted by the block ack agreement context of the device described by the block ack agreement context element are the same; the peer device targeted by the block ack agreement context in a case that the peer devices targeted by the block ack agreement context of the device described by the block ack agreement context element are the same; or, a number of block ack agreement context parameter sets included in the block ack agreement context element.

In some embodiments, the block ack agreement context element includes a block ack agreement context parameters set list field, and the block ack agreement context parameters set list field includes at least one block ack agreement context parameter set subfield. One block ack agreement context parameter set subfield indicates one block ack agreement context parameter set.

In some embodiments, the block ack agreement context parameter set subfield indicates at least one of: a role of the device hosting the corresponding block ack agreement context in the block ack agreement context; a peer device targeted by the corresponding block ack agreement context; a block ack parameter set; or a block ack timeout value.

In some embodiments, if the block ack agreement context parameter set subfield indicates that the role of the device hosting the corresponding block ack agreement context in the block ack agreement context is an originator, the block ack agreement context parameter set subfield further indicates at least one of a transmission window starting sequence number or a transmission window size.

In some embodiments, if the block ack agreement context parameter set subfield indicates that the role of the device hosting the corresponding block ack agreement context in the block ack agreement context is a recipient, the block ack agreement context parameter set subfield further indicates at least one of a receive buffer starting sequence number, a receive window size, a record bitmap starting sequence number, a record bitmap maximum sequence number, or a record bitmap size.

In some embodiments, the block ack parameter set includes at least one of: third indication information indicating whether an A-MSDU is supported; a block ack policy; a TID; or a buffer size.

In some embodiments, the second transition frame includes an SA context element for indicating information of SA context.

In some embodiments, the SA context element includes an SA context parameters control field, and the SA context parameters control field indicates at least one of: a device hosting the SA context described by the SA context element; whether peer devices targeted by the SA context of the device described by the SA context element are the same; the peer device targeted by the SA context in a case that the peer devices targeted by the SA context of the device described by the SA context element are the same; or, a number of SA context parameter sets included in the SA context element.

In some embodiments, the SA context element includes an SA context parameters set list field, and the SA context parameters set list field includes at least one SA context parameter set subfield, and one SA context parameter set subfield indicates one SA context parameter set.

In some embodiments, the SA context parameter set subfield indicates at least one of: a role of the device hosting the corresponding SA context in the SA context; a peer device targeted by the corresponding SA context; or an SA type of the corresponding SA context.

In some embodiments, if the SA context parameter set subfield indicates that the role of the device hosting the corresponding SA context in the SA context is a receiver, the SA context parameter set subfield further indicates at least one of: a number of replay counters; a TID; or a count of replay counter for the TID.

In some embodiments, if the SA context parameter set subfield indicates that the role of the device hosting the corresponding SA context in the SA context is a transmitter, the SA context parameter set subfield further indicates at least one of: a number of PN counters; a TID; or a count of PN counter for the TID.

In some embodiments, the second transition frame further includes fourth indication information. The fourth indication information is used for indicating that the second data includes information about block ack agreement context and/or SA context.

In some embodiments, if the AP MLD is the first AP MLD, the second communication unit 2701 is further configured to transmit or receive a second frame.

The second frame is used for the non-AP MLD to associate or reassociate with the first AP MLD.

In some embodiments, the second frame includes first information, and the first information includes at least one of first indication information or second indication information.

The first indication information indicates whether the non-AP MLD supports or is allowed to transition between two affiliated AP MLDs of the same MD AP MLD.

The second indication information indicates the third AP MLD.

In some embodiments, the first information is in an MDE.

In some embodiments, the first indication information is in a transition capability and policy field of the MDE.

In some embodiments, the second indication information includes at least one of a device identifier of the third AP MLD or a MAC address of the third AP MLD.

Those skilled in the art will appreciate that the above relevant description of the non-AP MLD or AP MLD in the embodiments of the present disclosure may be understood with reference to the relevant description of the wireless communication method in the embodiments of the present disclosure.

FIG. 28 is a schematic structural diagram of a communication device 2800 according to an embodiment of the present disclosure. The communication device may be a non-AP MLD, or an AP MLD. The communication device 2800 illustrated in FIG. 28 includes a processor 2810, and the processor 2810 may invoke and execute a computer program from a memory to implement the method in the embodiments of the present disclosure.

In an embodiment, as illustrated in FIG. 28, the communication device 2800 may further include a memory 2820. The processor 2810 may invoke and execute a computer program from the memory 2820 to implement the method in the embodiments of the present disclosure.

The memory 2820 may be a separate device independent of the processor 2810, or the memory 2820 may be integrated into the processor 2810.

In an embodiment, as illustrated in FIG. 28, the communication device 2800 may further include a transceiver 2830. The processor 2810 may control the transceiver 2830 to communicate with other devices, in particular, to send information or data to other devices, or receive information or data sent by other devices.

The transceiver 2830 may include a transmitter and a receiver. The transceiver 2830 may further include an antenna(s), the number of which may be one or more.

In an embodiment, the communication device 2800 may specifically be the non-AP MLD in the embodiments of the present disclosure, and the communication device 2800 may implement the corresponding process implemented by the non-AP MLD in each method of the embodiments of the present disclosure, which will not be repeated herein for the sake of brevity.

In an embodiment, the communication device 2800 may specifically be the AP MLD in the embodiments of the present disclosure, and the communication device 2800 may implement the corresponding process implemented by the AP MLD in each method of the embodiments of the present disclosure, which will not be repeated herein for the sake of brevity.

FIG. 29 is a schematic structural diagram of a chip according to an embodiment of the present disclosure. The chip 2900 illustrated in FIG. 29 includes a processor 2910, and the processor 2910 may invoke and execute a computer program from a memory to implement the method in the embodiments of the present disclosure.

In an embodiment, as illustrated in FIG. 29, the chip 2900 may further include a memory 2920. The processor 2910 may invoke and execute a computer program from the memory 2920 to implement the method in the embodiments of the present disclosure.

The memory 2920 may be a separate device independent of the processor 2910, or the memory 2920 may be integrated into the processor 2910.

In an embodiment, the chip 2900 may further include an input interface 2930. The processor 2910 may control the input interface 2930 to communicate with other devices or chips, and in particular may obtain information or data sent by other devices or chips.

In an embodiment, the chip 2900 may further include an output interface 2940. The processor 2910 may control the output interface 2940 to communicate with other devices or chips, and in particular may output information or data to other devices or chips.

In an embodiment, the chip may be applied to the non-AP MLD in the embodiments of the present disclosure, and the chip may implement the corresponding process implemented by the non-AP MLD in each method of the embodiments of the present disclosure, which is not repeated herein for the sake of brevity.

In an embodiment, the chip may be applied to the AP MLD in the embodiments of the present disclosure, and the chip may implement the corresponding process implemented by the AP MLD in each method of the embodiments of the present disclosure, which is not repeated herein for the sake of brevity.

It is to be understood that the chip mentioned in the embodiments of the present disclosure may also be referred to as a system-level chip, a system chip, a chip system, or a System on Chip (SOC) chip, etc.

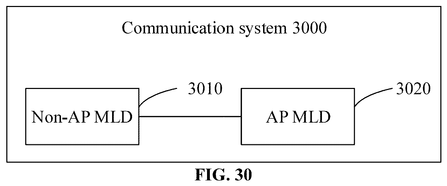

FIG. 30 is a schematic block diagram of a communication system 3000 according to an embodiment of the present disclosure. As illustrated in FIG. 30, the communication system 3000 includes a non-AP MLD 3010 and an AP MLD 3020. The non-AP MLD 3010 may be an STA (Non-AP MLD or Non-AP STA) that accesses the AP MLD 3020.

The AP MLD 3020 may be used for implementing the corresponding functions implemented by the AP MLD in the above method, which is not repeated herein for the sake of brevity. The non-AP MLD 3010 may be used for implementing the corresponding functions implemented by the non-AP MLD in the above method, which is not repeated herein for the sake of brevity.

It should be understood that the processor in the embodiments of the present disclosure may be an integrated circuit chip with a signal processing capability. During implementation, each operation of the above method embodiments may be completed by an integrated logic circuit of hardware in the processor or an instruction in form of software. The processor may be a general-purpose processor, a Digital Signal Processor (DSP), an Application Specific Integrated Circuit (ASIC), a Field Programmable Gate Array (FPGA), or another programmable logical device, discrete gate or transistor logical device and discrete hardware component. Each method, operation and logical block diagram disclosed in the embodiments of the present disclosure may be implemented or executed. The general-purpose processor may be a microprocessor or the processor may also be any conventional processor and the like. The operations of the method disclosed in combination with the embodiments of the present disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or an electrically erasable programmable memory, and a register. The storage medium is located in a memory, and the processor reads information in the memory, and completes operations of the above methods in combination with hardware thereof.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM and a DR RAM. That is, the memory in the embodiments of the present disclosure is intended to include but not limited to memories of these and any other proper types.

The embodiments of the present disclosure further provide a computer-readable storage medium, which is configured to store a computer program.

In an embodiment, the computer-readable storage medium may be applied to the non-AP MLD in the embodiments of the present disclosure, and execution of the computer program enables a computer to execute corresponding flows implemented by the non-AP MLD in each method of the embodiments of the present disclosure, which is not repeated herein for the sake of brevity.

In an embodiment, the computer-readable storage medium may be applied to the AP MLD in the embodiments of the present disclosure, and execution of the computer program enables a computer to execute corresponding flows implemented by the AP MLD in each method of the embodiments of the present disclosure, which is not repeated herein for the sake of brevity.

The embodiments of the present disclosure further provide a computer program product, which includes computer program instructions.

In an embodiment, the computer program product may be applied to the non-AP MLD in the embodiments of the present disclosure, and execution of the computer program instructions enable a computer to execute corresponding flows implemented by the non-AP MLD in each method of the embodiments of the present disclosure, which is not repeated herein for the sake of brevity.

In an embodiment, the computer program product may be applied to the AP MLD in the embodiments of the present disclosure, and execution of the computer program instructions enable a computer to execute corresponding flows implemented by the AP MLD in each method of the embodiments of the present disclosure, which is not repeated herein for the sake of brevity.

The embodiments of the present disclosure further provide a computer program.

In an embodiment, the computer program may be applied to the non-AP MLD in the embodiments of the present disclosure. The computer program, when run on a computer, enables the computer to execute corresponding flows implemented by the non-AP MLD in each method of the embodiments of the present disclosure, which is not repeated herein for the sake of brevity.

In an embodiment, the computer program may be applied to the AP MLD in the embodiments of the present disclosure. The computer program, when run on a computer, enables the computer to execute corresponding flows implemented by the AP MLD in each method of the embodiments of the present disclosure, which is not repeated herein for the sake of brevity.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A method for wireless communication, comprising:
receiving or transmitting, by a non-access point multi-link device, non-AP MLD, a first frame, wherein the first frame is used for the non-AP MLD to transition between a first AP MLD and a second AP MLD, the first AP MLD and the second AP MLD are affiliated with a same third AP MLD or different third AP MLDs, and the third AP MLD is a logical AP MLD.

2. The method of claim 1, wherein the first AP MLD is an AP MLD whose affiliated access points, APs, are co-located, and the second AP MLD is an AP MLD whose affiliated APs are co-located.

3. The method of claim 1 or 2, wherein the third AP MLD is configured for at least one of the following:
providing connection services between the non-AP MLD or an affiliated AP MLD and a distribution system, DS;
maintaining data continuity of the non-AP MLD when performing transition between the first AP MLD and the second AP MLD during roaming;
authentication and/or association or reassociation of the non-AP MLD;
security association, SA, of the non-AP MLD;
distribution of all or part of SA information of the non-AP MLD;
synchronization of all or part of states and/or buffer information of upper-upper Medium Access Control, upper-UMAC, of affiliated AP MLDs;
managing distribution of authentication information for a link of the non-AP MLD;
managing affiliated AP MLD-level association or reassociation between the non-AP MLD and an affiliated AP MLD;
selecting, for a target AP MLD among at least one affiliated AP MLD that establishes a multi-link with the non-AP MLD, a MAC corresponding to the target AP MLD for transmission;
synchronization of first data among different affiliated AP MLDs, wherein the first data is used to maintain data continuity of communication between the non-AP MLD and the affiliated AP MLD or the DS; or
exchange or indication of MLD-level information through a MAC sublayer of the affiliated AP MLD.

4. The method of any one of claims 1 to 3, wherein the first AP MLD and the second AP MLD belong to a same mobility domain, MD, within a same extended service set, ESS, and the third AP MLD is an MD AP MLD.

5. The method of any one of claims 1 to 4, wherein the first frame comprises first information, and the first information comprises at least one of:
first indication information for indicating whether the non-AP MLD supports or is allowed to transition between two affiliated AP MLDs of the same MD AP MLD; or
second indication information for indicating the third AP MLD.

6. The method of any one of claims 1 to 5, wherein the first frame comprises at least one of the following:
a first transition frame for initiating transition of the non-AP MLD from the first AP MLD to the second AP MLD;
a second transition frame used for the first AP MLD to synchronize second data to the second AP MLD, wherein the second data is used for maintaining data communication between the non-AP MLD and the first AP MLD or the third AP MLD to maintain continuity of data communication after the non-AP MLD transitions to the second AP MLD; or
a third transition frame used for the non-AP MLD to associate or reassociate with the second AP MLD.

7. The method of claim 6, wherein the first transition frame comprises at least one of the following:
a transition request frame sent by the non-AP MLD to the second AP MLD for requesting transition from the first AP MLD to the second AP MLD; or
a transition response frame sent by the second AP MLD to the non-AP MLD for responding to the transition request frame.

8. The method of claim 6, wherein the second transition frame comprises at least one of the following:
a first transition confirm frame sent by the non-AP MLD to the first AP MLD for requesting the first AP MLD to synchronize the second data to the second AP MLD; or
a first transition acknowledgement, ACK, frame sent by the first AP MLD to the non-AP MLD for feeding back a synchronization state and/or synchronization information of the second data.

9. The method of claim 8, wherein the first transition confirm frame carries third data of the non-AP MLD, the third data is used to maintain data communication between the non-AP MLD and the first AP MLD or the third AP MLD, and the third data is further used by the first AP MLD to determine the second data.

10. The method of claim 6, wherein the third transition frame comprises at least one of the following:
an association request frame or a reassociation request frame sent by the non-AP MLD to the second AP MLD; or
an association response frame or a reassociation response frame sent by the second AP MLD to the non-AP MLD.

11. The method of claim 6 or 8, wherein the second data comprises at least one of second information or third information, wherein
the second information is information of block ack agreement context of the first AP MLD;
the third information is information of SA context of the first AP MLD.

12. The method of claim 11, wherein the second transition frame comprises a block ack agreement context element for indicating information of the block ack agreement context.

13. The method of claim 12, wherein the block ack agreement context element comprises a block ack agreement context parameters control field, and the block ack agreement context parameters control field indicates at least one of:
a device hosting the block ack agreement context described by the block ack agreement context element;
whether peer devices targeted by the block ack agreement context of the device described by the block ack agreement context element are the same;
in a case that the peer devices targeted by the block ack agreement context of the device described by the block ack agreement context element are the same, the peer device targeted by the block ack agreement context; or
a number of block ack agreement context parameter sets included in the block ack agreement context element.

14. The method of claim 12 or 13, wherein the block ack agreement context element comprises a block ack agreement context parameters set list field, and the block ack agreement context parameters set list field comprises at least one block ack agreement context parameter set subfield, and one block ack agreement context parameter set subfield indicates one block ack agreement context parameter set.

15. The method of claim 14, wherein the block ack agreement context parameter set subfield indicates at least one of:
a role of the device hosting the corresponding block ack agreement context in the block ack agreement context;
a peer device targeted by the corresponding block ack agreement context;
a block ack parameter set; or
a block ack timeout value.

16. The method of claim 15, wherein if the block ack agreement context parameter set subfield indicates that the role of the device hosting the corresponding block ack agreement context in the block ack agreement context is an originator, the block ack agreement context parameter set subfield further indicates at least one of a transmission window starting sequence number or a transmission window size.

17. The method of claim 15, wherein if the block ack agreement context parameter set subfield indicates that the role of the device hosting the corresponding block ack agreement context in the block ack agreement context is a recipient, the block ack agreement context parameter set subfield further indicates at least one of a receive buffer starting sequence number, a receive window size, a record bitmap starting sequence number, a record bitmap maximum sequence number, or a record bitmap size.

18. The method of any one of claims 15 to 17, wherein the block ack parameter set comprises at least one of the following:
third indication information indicating whether an aggregated MAC service data unit, A-MSDU, is supported;
a block ack policy;
a traffic identifier, TID; or
a buffer size.

19. The method of any one of claims 11 to 18, wherein the second transition frame comprises an SA context element for indicating information of SA context.

20. The method of claim 19, wherein the SA context element comprises an SA context parameters control field, and the SA context parameters control field indicates at least one of:
a device hosting the SA context described by the SA context element;
whether peer devices targeted by the SA context of the device described by the SA context element are the same;
in a case that the peer devices targeted by the SA context of the device described by the SA context element are the same, the peer device targeted by the SA context; or
a number of SA context parameter sets included in the SA context element.

21. The method of claim 19 or 20, wherein the SA context element comprises an SA context parameters set list field, and the SA context parameters set list field comprises at least one SA context parameter set subfield, and one SA context parameter set subfield indicates one SA context parameter set.

22. The method of claim 21, wherein the SA context parameter set subfield indicates at least one of:
a role of the device hosting the corresponding SA context in the SA context;
a peer device targeted by the corresponding SA context; or
an SA type of the corresponding SA context.

23. The method of claim 22, wherein if the SA context parameter set subfield indicates that the role of the device hosting the corresponding SA context in the SA context is a receiver, the SA context parameter set subfield further indicates at least one of: a number of replay counters; a TID; or a count of replay counter for the TID.

24. The method of claim 22, wherein if the SA context parameter set subfield indicates that the role of the device hosting the corresponding SA context in the SA context is a transmitter, the SA context parameter set subfield further indicates at least one of: a number of packet number, PN, counters; a TID; or a count of PN counter for the TID.

25. The method of any one of claims 6, 8, 9 and 11 to 24, wherein the second transition frame further comprises fourth indication information for indicating that the second data comprises information about block ack agreement context and/or SA context.

26. The method of any one of claims 1 to 25, further comprising:
receiving or transmitting, by the non-AP MLD, a second frame, wherein the second frame is used for the non-AP MLD to associate or reassociate with the first AP MLD.

27. The method of claim 26, wherein the second frame comprises first information, and the first information comprises at least one of first indication information or second indication information, wherein
the first indication information indicates whether the non-AP MLD supports or is allowed to transition between two affiliated AP MLDs of the same MD AP MLD;
the second indication information indicates the third AP MLD.

28. The method of claim 5 or 27, wherein the first information is in a mobility domain element, MDE.

29. The method of claim 28, wherein the first indication information is in a transition capability and policy field of the MDE.

30. The method of any one of claims 5 and 27 to 29, wherein the second indication information comprises at least one of a device identifier of the third AP MLD or a MAC address of the third AP MLD.

31. A method for wireless communication, comprising:
transmitting or receiving, by an access point multi-link device, AP MLD, a first frame, wherein the first frame is used for the AP MLD to transition between a first AP MLD and a second AP MLD, the first AP MLD and the second AP MLD are affiliated with a same third AP MLD or different third AP MLDs, the third AP MLD is a logical AP MLD, and the AP MLD is the first AP MLD or the second AP MLD.

32. The method of claim 31, wherein the first AP MLD is an AP MLD whose affiliated access points, APs, are co-located, and the second AP MLD is an AP MLD whose affiliated APs are co-located.

33. The method of claim 31 or 32, wherein the third AP MLD is configured for at least one of the following:
providing connection services between a non-AP MLD or an affiliated AP MLD and a distribution system, DS;
maintaining data continuity of the non-AP MLD when performing transition between the first AP MLD and the second AP MLD during roaming;
authentication and/or association or reassociation of the non-AP MLD;
security association, SA, of the non-AP MLD;
distribution of all or part of SA information of the non-AP MLD;
synchronization of all or part of states and/or buffer information of upper-upper Medium Access Control, upper-UMAC, of affiliated AP MLDs;
managing distribution of authentication information for a link of the non-AP MLD;
managing affiliated AP MLD-level association or reassociation between the non-AP MLD and an affiliated AP MLD;
selecting, for a target AP MLD among at least one affiliated AP MLD that establishes a multi-link with the non-AP MLD, a MAC corresponding to the target AP MLD for transmission;
synchronization of first data among different affiliated AP MLDs, wherein the first data is used to maintain data continuity of communication between the non-AP MLD and the affiliated AP MLD or the DS; or
exchange or indication of MLD-level information through a MAC sublayer of the affiliated AP MLD.

34. The method of any one of claims 31 to 33, wherein the first AP MLD and the second AP MLD belong to a same mobility domain, MD, within a same extended service set, ESS, and the third AP MLD is an MD AP MLD.

35. The method of any one of claims 31 to 34, wherein the first frame comprises first information, and the first information comprises at least one of:
first indication information for indicating whether the non-AP MLD supports or is allowed to transition between two affiliated AP MLDs of the same MD AP MLD; or
second indication information for indicating the third AP MLD.

36. The method of any one of claims 31 to 35, wherein the first frame comprises at least one of the following:
a first transition frame for initiating transition of the non-AP MLD from the first AP MLD to the second AP MLD;
a second transition frame used for the first AP MLD to synchronize second data to the second AP MLD, wherein the second data is used for maintaining data communication between the non-AP MLD and the first AP MLD or the third AP MLD to maintain continuity of data communication after the non-AP MLD transitions to the second AP MLD; or
a third transition frame used for the non-AP MLD to associate or reassociate with the second AP MLD.

37. The method of claim 36, wherein the first transition frame comprises at least one of the following:
a transition request frame sent by the non-AP MLD to the second AP MLD for requesting transition from the first AP MLD to the second AP MLD; or
a transition response frame sent by the second AP MLD to the non-AP MLD for responding to the transition request frame.

38. The method of claim 36, wherein the second transition frame comprises at least one of a first transition confirm frame, a second transition confirm frame, a first transition acknowledgement, ACK, frame, or a second transition ACK frame, wherein
the first transition confirm frame is sent by the non-AP MLD to the first AP MLD and used for requesting the first AP MLD to synchronize the second data of the first AP MLD to the second AP MLD;
the second transition confirm frame is sent by the first AP MLD to the second AP MLD and used for the first AP MLD to synchronize the second data to the second AP MLD;
the first transition ACK frame is sent by the first AP MLD to the non-AP MLD and used to feed back a synchronization state of the second data to the non-AP MLD;
the second transition ACK frame is sent by the second AP MLD to the first AP MLD and used to feed back a synchronization state of the second data to the first AP MLD.

39. The method of claim 38, wherein the first transition confirm frame carries third data of the non-AP MLD, the third data is used to maintain data communication between the non-AP MLD and the first AP MLD or the third AP MLD, and the third data is further used by the first AP MLD to determine the second data.

40. The method of claim 36, wherein the third transition frame comprises at least one of the following:
an association request frame or a reassociation request frame sent by the non-AP MLD to the second AP MLD; or
an association response frame or a reassociation response frame sent by the second AP MLD to the non-AP MLD.

41. The method of claim 36 or 38, wherein the second data comprises at least one of second information or third information, wherein
the second information is information of block ack agreement context of the first AP MLD;
the third information is information of SA context of the first AP MLD.

42. The method of claim 41, wherein the second transition frame comprises a block ack agreement context element for indicating information of the block ack agreement context.

43. The method of claim 42, wherein the block ack agreement context element comprises a block ack agreement context parameters control field, and the block ack agreement context parameters control field indicates at least one of:
a device hosting the block ack agreement context described by the block ack agreement context element;
whether peer devices targeted by the block ack agreement context of the device described by the block ack agreement context element are the same;
in a case that the peer devices targeted by the block ack agreement context of the device described by the block ack agreement context element are the same, the peer device targeted by the block ack agreement context; or
a number of block ack agreement context parameter sets included in the block ack agreement context element.

44. The method of claim 42 or 43, wherein the block ack agreement context element comprises a block ack agreement context parameters set list field, the block ack agreement context parameters set list field comprises at least one block ack agreement context parameter set subfield, and one block ack agreement context parameter set subfield indicates one block ack agreement context parameter set.

45. The method of claim 44, wherein the block ack agreement context parameter set subfield indicates at least one of:
a role of the device hosting the corresponding block ack agreement context in the block ack agreement context;
a peer device targeted by the corresponding block ack agreement context;
a block ack parameter set; or
a block ack timeout value.

46. The method of claim 45, wherein if the block ack agreement context parameter set subfield indicates that the role of the device hosting the corresponding block ack agreement context in the block ack agreement context is an originator, the block ack agreement context parameter set subfield further indicates at least one of a transmission window starting sequence number or a transmission window size.

47. The method of claim 45, wherein if the block ack agreement context parameter set subfield indicates that the role of the device hosting the corresponding block ack agreement context in the block ack agreement context is a recipient, the block ack agreement context parameter set subfield further indicates at least one of a receive buffer starting sequence number, a receive window size, a record bitmap starting sequence number, a record bitmap maximum sequence number, or a record bitmap size.

48. The method of any one of claims 45 to 47, wherein the block ack parameter set comprises at least one of the following:
third indication information indicating whether an aggregated MAC service data unit, A-MSDU, is supported;
a block ack policy;
a traffic identifier, TID; or
a buffer size.

49. The method of any one of claims 39 to 48, wherein the second transition frame comprises an SA context element for indicating information of SA context.

50. The method of claim 49, wherein the SA context element comprises a SA context parameters control field, and the SA context parameters control field indicates at least one of:
a device hosting the SA context described by the SA context element;
whether peer devices targeted by the SA context of the device described by the SA context element are the same;
in a case that the peer devices targeted by the SA context of the device described by the SA context element are the same, the peer device targeted by the SA context; or
a number of SA context parameter sets included in the SA context element.

51. The method of claim 49 or 50, wherein the SA context element comprises an SA context parameters set list field, the SA context parameters set list field comprises at least one SA context parameter set subfield, and one SA context parameter set subfield indicates one SA context parameter set.

52. The method of claim 51, wherein the SA context parameter set subfield indicates at least one of:
a role of the device hosting the corresponding SA context in the SA context;
a peer device targeted by the corresponding SA context; or
an SA type of the corresponding SA context.

53. The method of claim 52, wherein if the SA context parameter set subfield indicates that the role of the device hosting the corresponding SA context in the SA context is a receiver, the SA context parameter set subfield further indicates at least one of: a number of replay counters; a TID; or a count of replay counter for the TID.

54. The method of claim 52, wherein if the SA context parameter set subfield indicates that the role of the device hosting the corresponding SA context in the SA context is a transmitter, the SA context parameter set subfield further indicates at least one of: a number of packet number, PN, counters; a TID; or a count of PN counter for the TID.

55. The method of any one of claims 36, 38, 39 and 41 to 53, wherein the second transition frame further comprises fourth indication information for indicating that the second data comprises information about block ack agreement context and/or SA context.

56. The method of any one of claims 31 to 55, wherein if the AP MLD is the first AP MLD, the method further comprises:
transmitting or receiving, by the AP MLD, a second frame, wherein the second frame is used for the non-AP MLD to associate or reassociate with the first AP MLD.

57. The method of claim 56, wherein the second frame comprises first information, and the first information comprises at least one of first indication information or second indication information, wherein
the first indication information indicates whether the non-AP MLD supports or is allowed to transition between two affiliated AP MLDs of the same MD AP MLD;
the second indication information indicates the third AP MLD.

58. The method of claim 35 or 57, wherein the first information is in a mobility domain element, MDE.

59. The method of claim 58, wherein the first indication information is in a transition capability and policy field of the MDE.

60. The method of any one of claims 35 and 56 to 58, wherein the second indication information comprises at least one of a device identifier of the third AP MLD or a MAC address of the third AP MLD.

61. A non-access point multi-link device, non-AP MLD, comprising: a processor and a memory, wherein the memory is configured to store a computer program, and the processor is configured to invoke and run the computer program stored in the memory, to cause the non-AP MLD to perform the method of any one of claims 1 to 30.

62. An access point multi-link device, AP MLD, comprising: a processor and a memory, wherein the memory is configured to store a computer program, and the processor is configured to invoke and run the computer program stored in the memory, to cause the AP MLD to perform the method of any one of claims 31 to 60.

63. A chip, comprising: a processor, configured to invoke and run a computer program from a memory, to cause a device equipped with the chip to perform the method of any one of claims 1 to 30, or perform the method of any one of claims 31 to 60.

64. A computer-readable storage medium, configured to store a computer program, wherein execution of the computer program causes a computer to perform the method of any one of claims 1 to 30, or perform the method of any one of claims 31 to 60.

65. A computer program product, comprising computer program instructions, wherein execution of the computer program instructions causes a computer to perform the method of any one of claims 1 to 30, or perform the method of any one of claims 31 to 60.

66. A computer program, wherein execution of the computer program causes a computer to perform the method of any one of claims 1 to 30, or perform the method of any one of claims 31 to 60.
